(19) Europäisches Patentamt / European Patent Office / Office européen des brevets

(11) **EP 3 232 171 B1**

(12) **EUROPEAN PATENT SPECIFICATION**

(45) Date of publication and mention of the grant of the patent:
**12.06.2024 Bulletin 2024/24**

(21) Application number: **15866940.8**

(22) Date of filing: **03.12.2015**

(51) International Patent Classification (IPC):
*G01J 3/02* $^{(2006.01)}$   *G01N 21/27* $^{(2006.01)}$
*G01J 3/42* $^{(2006.01)}$   *G01J 3/10* $^{(2006.01)}$
*G01N 21/25* $^{(2006.01)}$

(52) Cooperative Patent Classification (CPC):
**G01J 3/10; G01J 3/021; G01J 3/0251; G01J 3/0262; G01J 3/0291; G01N 21/251; G01N 21/255; G01N 21/274;** G01J 2003/425

(86) International application number:
**PCT/JP2015/083944**

(87) International publication number:
**WO 2016/093131 (16.06.2016 Gazette 2016/24)**

(54) **ILLUMINATION DEVICE AND REFLECTION CHARACTERISTICS MEASUREMENT DEVICE**

BELEUCHTUNGSVORRICHTUNG UND VORRICHTUNG ZUR MESSUNG VON REFLEKTIONSEIGENSCHAFTEN

DISPOSITIF D'ÉCLAIRAGE ET DISPOSITIF DE MESURE DE CARACTÉRISTIQUES DE RÉFLEXION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.12.2014 JP 2014249708**

(43) Date of publication of application:
**18.10.2017 Bulletin 2017/42**

(73) Proprietor: **Konica Minolta, Inc.
Tokyo 100-7015 (JP)**

(72) Inventors:
• **KAWASAKI Takashi
Tokyo 100-7015 (JP)**

• **KAWANO Toshio
Tokyo 100-7015 (JP)**

(74) Representative: **Hoffmann Eitle
Patent- und Rechtsanwälte PartmbB
Arabellastraße 30
81925 München (DE)**

(56) References cited:
**EP-A1- 0 964 244      EP-A2- 0 525 948
WO-A1-2014/061191    WO-A1-2014/192554
WO-A1-2014/192554    JP-A- H10 504 655
US-A1- 2010 277 728**

**Description**

Technical Field

The present invention relates to a reflection characteristics measurement device having an illumination device.

Background Art

A light-receiving system having a predetermined geometry, for example, a so-called 45 ° :0 ° geometry is used for measuring spectral reflectance characteristics. The light-receiving system having the 45° :0° geometry includes an illumination optical system for illuminating a sample surface from a direction forming 45° with a normal line of the sample surface and a light-receiving optical system for receiving a reflection light reflected from the sample surface from a direction of the normal line.

For example, Patent Document 1 suggests a technique as the illumination optical system having such a geometry. In this technique, the 45° :0° geometry is achieved by deflecting part of light emitted from a large number of LED light sources disposed on a circumference of circle surrounding the normal line of the sample surface by a mirror to apply all of the light at a 45-degree angle with the sample surface. In this technique, specifically, three sets of nine LED light sources each having nine different types of spectra are arranged along a circumferential direction of a cylinder. The sample is thereby illuminated by the light having wavelength over an entire visible light region from three orientations.

In a colorimeter described in Patent Document 2, an illumination optical system including one surface light source disposed on a normal line of a sample surface and a large number of planar mirrors is used. The surface light source emits a light beam in all orientations forming a 45-degree angle with the normal line of the sample surface. The larger number of the planar mirrors are disposed midway between the sample surface and the light source along the cylinder surrounding the normal line of the sample surface in the circumferential direction thereof. The emitted light beam is deflected by the large number of planar mirrors in a direction of the sample surface. The 45° :0° geometry is thereby achieved.

The colorimeter of the Patent Document 2 further includes a light-receiving mechanism for color measurement extending from the normal line of the sample surface to an outside of the cylinder on which the mirrors are disposed.

Prior Art Documents

Patent Documents

Patent Document 1: Specification of US Patent No. 8130377
Patent Document 2: Japanese Patent Application Laid-Open No. 2010-281808

See also WO 2014/192554 A1 describing an illumination device whereby an index that appropriately takes into account the intensity of a light beam guided to an object being illuminated. Said illumination device is provided with a light source, a photodetector, and a support structure. The light source, which emits light, has either an intensity distribution in which a reference axis is an axis of symmetry or an intensity distribution in which a plane containing said reference axis is a plane of symmetry. The support structure supports the light source and the photodetector such that said light source and photodetector are positioned and oriented such that a first light beam that is part of the abovementioned light is guided to the object being illuminated and a second light beam that is part of said light is guided to the photodetector. The photodetector detects the intensity of the second light beam. The direction in which the first light beam travels makes a first angle with the abovementioned reference axis, the direction in which the second light beam travels makes a second angle with said reference axis, and said second angle is congruent to the first angle.

Summary

Problems to be Solved by the Invention

In a case where a sample whose surface has a directional property such as a wrinkle pattern or a stripe pattern is illuminated by the illumination optical system having the 45° :0° geometry, there is a problem that an amount of reflection light fluctuates depending on the direction of the sample with regard to the illumination when the orientation of the light illuminating the sample surface with regard to the sample surface is limited. When the amount of light fluctuates, a stable measurement value cannot be obtained.

The LEDs having the nine different types of spectra are used in the technique of the Patent Document 1, however, the three LED light sources have the same spectrum. Therefore, the sample surface is equivalently illuminated from the three orientations by the three light sources which are respectively disposed in three extremely narrow local regions on the circumference of circle.

Accordingly, when the sample surface having the directional property is measured by the illumination optical system of the Patent Document 1, the amount of reflection light reflected from the sample surface significantly fluctuates for each spectrum in accordance with a direction of the sample surface with regard to the illumination optical system. Moreover, since only the light, which is output near the one orientation, in the light being output from each LED light source is used, there is also a problem that usage efficiency of a bundle of light beams is reduced.

The colorimeter of the Patent Document 2 enables an efficient use of the light of the light source compared with the device of the Patent Document 1. Moreover, the colorimeter of the Patent Document 2 emits the light from the surface light source in all the orientation, and the light is reflected from the large number of mirrors disposed on the cylinder toward the sample surface to illuminate the sample surface. Accordingly, the colorimeter of the Patent Document 2 enables the stable acquisition of the measurement value compared with the device of the Patent Document 1 in also measuring the sample whose surface has the directional property.

However, in the colorimeter of the Patent Document 2, a part of illumination light reflected by the large number of planar mirrors surrounding the normal line of the sample surface is shielded by the light-receiving mechanism for color measurement extending from the normal line of the sample surface to the outside of the cylinder on which the mirrors are disposed. Therefore, when the sample having the directional property in the reflectance characteristics is measured, the amount of light reflected from the sample surface fluctuates depending on the orientation of the sample surface with regard to the light-receiving mechanism.

Accordingly, even in the colorimeter of the Patent Document 2, there is still the problem that the amount of reflection light reflected from the sample surface significantly fluctuates depending on the direction of the sample with regard to the colorimeter.

The present invention has been achieved to solve the above-described problem, and it is an object of the present invention to provide a technique which enables a suppression of fluctuation in the amount of light reflected from a to-be-illuminated surface having directional property in the reflectance characteristics and improvement in usage efficiency of a bundle of light beams emitted from a light source.

According to the present invention, there is provided a reflection characteristics measurement device as set out in Claim 1.

Brief Description of the Drawings

[Fig. 1] A schematic diagram of a colorimeter.
[Fig. 2] A top view of a measurement mechanism.
[Fig. 3] A bottom view of the measurement mechanism.
[Fig. 4] A transverse cross-sectional view of the measurement mechanism.
[Fig. 5] A diagram illustrating a part in which each light-receiving mechanism for color measurement and correction is excluded from the measurement mechanism of Fig. 4.
[Fig. 6] A vertical cross-sectional view of the measurement mechanism.
[Fig. 7] A cross-sectional view of a light radiation mechanism.
[Fig. 8] A perspective view of a part of straight-tube type xenon lamp and a part of baffle.
[Fig. 9] A top view illustrating a configuration of a part of illumination mechanism.
[Fig. 10] A perspective view illustrating a configuration of a part of illumination mechanism.
[Fig. 11] A view showing one example of a fluctuation in an amount of illumination light emitted from each direction in a graph form.
[Fig. 12] A view showing one example of a fluctuation in a reflection ratio (a periodic noise) of a sample surface when the illumination light is reflected from the to-be-illuminated surface in a direction of light-receiving angle 0°.
[Fig. 13] A view showing one example of a fluctuation in a product of a periodic noise N in the to-be-illuminated surface and a periodic signal of the illumination light in a graph form.
[Fig. 14] A view showing one example of a fluctuation in an amount of reflection light in the direction of light-receiving angle 0° in a graph form.
[Fig. 15] A view showing an example of a fluctuation in an amplitude of the amount of reflection light in the direction of light-receiving angle 0° in a graph form.
[Fig. 16] A view showing one example of a fluctuation in an amplitude of the amount of reflection light in the direction of light-receiving angle 0° in a graph form.

[Fig. 17] A view showing one example of a fluctuation in an amplitude of the amount of reflection light in the direction of light-receiving angle 0° in a graph form.

[Fig. 18] A view showing one example of a fluctuation in an amplitude of the amount of reflection light in the direction of light-receiving angle 0° in a graph form.

Detailed Description

An illumination device according a first aspect described herein illuminates a to-be-illuminated surface and includes: a surface light source being disposed on a normal line of the to-be-illuminated surface; and a reflection mechanism being provided between the surface light source and the to-be-illuminated surface so as to surround the normal line for reflecting a light emitted from the surface light source toward the to-be-illuminated surface, wherein in the reflection mechanism, a reflection region that reflects the light toward the to-be-illuminated surface and a non-reflection region that does not reflect the light toward the to-be-illuminated surface are alternately disposed along a virtual cylindrical surface surrounding the normal line in a circumferential direction of the virtual cylindrical surface, and three or more reflection regions and three or more non-reflection regions are thereby disposed, each of the three or more reflection regions is a region having a partially-cylindrical shape to follow the virtual cylindrical surface, and the three or more non-reflection regions are dispersedly disposed to surround the normal line in the circumferential direction.

According to the illumination device of the first aspect, the three or more non-reflection regions are dispersedly disposed in the circumferential direction of the virtual cylindrical surface surrounding the normal line of the to-be-illuminated surface. Accordingly, the three or more reflection regions are also dispersedly disposed in the circumferential direction. In the meanwhile, a wrinkle pattern or a stripe pattern in the to-be-illuminated surface has a two-fold rotational symmetry in many cases. Therefore, suppressed is an occurrence of a case where an amount of reflection light extremely decreases by reason that, in the to-be-illuminated surface, the illumination light is emitted from all the orientations in which the reflection ratio is low and the illumination light is not emitted from all the orientations in which the reflection ratio is high. Moreover, also suppressed is an occurrence of a case where the amount of reflection light extremely increases by reason that the illumination light is not emitted from all the orientations in which the reflection ratio is low and the illumination light is emitted from all the orientations in which the reflection ratio is high. Accordingly, the fluctuation in the amount of light, which is emitted from the reflection mechanism to the to-be-illuminated surface having a directional property (also referred to as "an aeolotropy") in reflectance characteristics and is then reflected from the to-be-illuminated surface, can be suppressed. Since each of the three or more reflection regions is a partially-cylindrical region following the virtual cylindrical surface, it can efficiently reflect a bundle of light beams, which is reflected from each reflection region in a bundle of light beams emitted from the surface light source, toward the to-be-illuminated surface. Accordingly, the usage efficiency of the bundle of light beams can be improved.

An illumination device according to a second aspect is the illumination device according to the first aspect, wherein the three or more non-reflection regions are disposed at regular intervals in the circumferential direction.

According to the illumination device of the second aspect, since the three or more non-reflection regions are disposed at regular intervals in the circumferential direction of the virtual cylindrical surface surrounding the normal line of the to-be-illuminated surface, the fluctuation in the amount of light reflected from the to-be-illuminated surface having the directional property in the reflectance characteristics can be further suppressed.

An illumination device according to a third aspect is the illumination device according to the first or second aspect, wherein a plurality of reflection surfaces each reflecting the light toward the to-be-illuminated surface are provided in each of the three or more reflection regions, and the plurality of reflection surfaces are arranged along the virtual cylindrical surface in the circumferential direction.

According to the illumination device of the third aspect, the plurality of reflection surfaces are provided in each of the three or more reflection regions, and the plurality of reflection surfaces are arranged along the virtual cylindrical surface in the circumferential direction. Accordingly, the usage efficiency of the bundle of light beams emitted from the surface light source can be further improved by adjusting each direction of the plurality of reflection surfaces.

A illumination device according to a fourth aspect is the illumination device according to the third aspect, wherein each of the plurality of reflection surfaces is a planate reflection surface.

According to the illumination device of the fourth aspect, since each of the plurality of reflection surfaces is the planate reflection surface, each reflection surface can be easily manufactured, and the illumination device having little variation in performance can be easily manufactured.

An illumination device according to a fifth aspect is the illumination device according to the third aspect, wherein each of the plurality of reflection surfaces is a curved reflection surface extending in a direction of the normal line, and a cross section perpendicular to the normal line forms an arc-like curved line convex toward a side of the normal line or an opposite side of the normal line.

According to the illumination device of the fifth aspect, each of the plurality of reflection surfaces is the curved reflection surface extending in the direction of the normal line, and the cross section perpendicular to the normal line forms the arc-like curved line convex toward the side of the normal line or the opposite side of the normal line, so that a region illuminated by the light reflected from each reflection surface can be widened and narrowed.

An illumination device according to a sixth aspect is the illumination device according to any one of the third to fifth aspects, wherein the reflection mechanism includes a plurality of members arranged in the circumferential direction of the virtual cylindrical surface for each of the plurality of reflection regions, each of the plurality of members includes an opposed surface facing the normal line, the plurality of reflection surfaces are formed in the opposed surface in at least one member in the plurality of members, and the members adjacent to each other in the plurality of members are coupled to each other so that each direction of the plurality of reflection surfaces is fixed to each other.

According to the illumination device of the sixth aspect, the reflection mechanism includes the plurality of members arranged in the circumferential direction of the virtual cylindrical surface for each of the plurality of reflection regions. The plurality of reflection surfaces are formed in the opposed surface in the at least one member in the plurality of members. The members adjacent to each other in the plurality of members are coupled to each other so that each direction of the plurality of reflection surfaces is fixed to each other. Accordingly, a total number of components constituting the reflection mechanism can be reduced and a manufacturing cost of the illumination device can be thereby reduced.

An illumination device according to a seventh aspect is the illumination device according to any one of the third to sixth aspects, wherein a non-reflection part which does not reflect the light toward the to-be-illuminated surface is disposed in a part of each of the three or more reflection regions, and three or more non-reflection parts being disposed in each of the three or more reflection regions are dispersedly disposed in the circumferential direction of the virtual cylindrical surface so as to surround the normal line.

According to the illumination device of the seventh aspect, the three or more non-reflection parts disposed in each of the three or more reflection regions are dispersedly disposed in the circumferential direction of the virtual cylindrical surface. Further suppressed is an occurrence of a case where the amount of reflection light extremely decreases by reason that, in the to-be-illuminated surface, the illumination light is emitted from all the orientations in which the reflection ratio is low and the illumination light is not emitted from all the orientations in which the reflection ratio is high. Moreover, also further suppressed is an occurrence of a case where the amount of reflection light extremely increases by reason that the illumination light is not emitted from all the orientations in which the reflection ratio is low and the illumination light is emitted from all the orientations in which the reflection ratio is high. Accordingly, the fluctuation in the amount of light reflected from the to-be-illuminated surface, which has the directional property in the reflectance characteristics, can be further suppressed.

An illumination device according to an eighth aspect is the illumination device according to the seventh aspect, wherein the three or more non-reflection parts are disposed at regular intervals in the circumferential direction.

According to the illumination device of the eighth aspect, the three or more non-reflection parts are disposed at regular intervals in the circumferential direction of the virtual cylindrical surface. Accordingly, the fluctuation in the amount of light reflected from the to-be-illuminated surface, which has the directional property in the reflectance characteristics, can be further suppressed.

An illumination device according to a ninth aspect is the illumination device according to a seventh or eighth aspect, wherein the non-reflection part occupies a range, in the reflection region, larger than a range occupied by one reflection surface, in the reflection region, in the plurality of reflection surfaces.

According to the illumination device of the ninth aspect, the non-reflection part occupies a range, in the reflection region, larger than a range occupied by one reflection surface, in the reflection region, in the plurality of reflection surfaces. Accordingly, since the extreme reduction in the size of the non-reflection region can be suppressed, the fluctuation in the amount of light reflected from the to-be-illuminated surface, which has the directional property in the reflectance characteristics, can be further suppressed.

An illumination device according to a tenth aspect is the illumination device according to any one of the seventh to ninth aspects, wherein a part of the reflection region excluding the non-reflection part is larger than the non-reflection part.

According to the illumination device of the tenth aspect, since the part of the reflection region excluding the non-reflection part is larger than the non-reflection part, the reduction in the amount of light reflected from the reflection region toward the to-be-illuminated surface can be suppressed.

An illumination device according to an eleventh aspect is the illumination device according to any one of the first to tenth aspects, wherein the surface light source is a light radiation mechanism that includes: an integrating sphere in which a spherical space and a round emission port are formed, the integrating sphere including an inner surface specifying the space, the inner surface including a diffusion reflection surface, the emission port connecting the space and outside, and the space and the emission port having the normal line as a common central axis; and a straight-tube type light source which passes across the space to extend in a tube axis direction and includes a discharge section.

According to the illumination device of the eleventh aspect, the light emitted from the straight-tube type light source is diffused and reflected by the diffusion reflection surface and then emitted from the round emission port, the light emitted from the surface light source is uniformized, and the surface light source substantially has vertical light distribution characteristics conforming to Lambert's cosine law. Accordingly, even when the to-be-illuminated surface moves in the direction of its normal line, the fluctuation in the illumination intensity can be suppressed.

An illumination device according to a twelfth aspect is the illumination device according to any one of the first to tenth aspects, wherein the surface light source is an LED light source.

According to the illumination device of the twelfth aspect, since the surface light source is the LED light source, the surface light source can be reduced in size, and a size of the whole illumination device can be thereby reduced.

A reflection characteristics measurement device according to a thirteenth aspect described herein includes: the illumination device according to any one of the first to twelfth aspects; and a light-receiving mechanism that receives a reflection light generated at a time when the to-be-illuminated surface reflects the light reflected by the reflection mechanism, and then outputs a measurement result of the reflection light.

According to the reflection characteristics measurement device of the thirteenth aspect, the fluctuation in the amount of light reflected from the to-be-illuminated surface can be suppressed even when the measurement is performed on the to-be-illuminated surface having the directional property in the reflectance characteristics, so that the stable measurement value can be obtained.

An illumination device according to a fourteenth aspect illuminates a to-be-illuminated surface and includes: a surface light source being disposed on a normal line of the to-be-illuminated surface; and a reflection mechanism being provided between the surface light source and the to-be-illuminated surface so as to surround the normal line for reflecting a light emitted from the surface light source toward the to-be-illuminated surface, wherein in the reflection mechanism, a reflection region that reflects the light toward the to-be-illuminated surface and a low-reflection region having a reflection ratio at a time of reflecting the light toward the to-be-illuminated surface lower than the reflection region are alternately disposed along a virtual cylindrical surface surrounding the normal line in a circumferential direction of the virtual cylindrical surface, and three or more reflection regions and three or more low-reflection regions are thereby disposed, each of the three or more reflection regions is a region having a partially-cylindrical shape to follow the virtual cylindrical surface, and the three or more low-reflection regions are dispersedly disposed to surround the normal line in the circumferential direction.

According to the illumination device of the fourteenth aspect, the three or more non-reflection regions are dispersedly disposed in the circumferential direction of the virtual cylindrical surface surrounding the normal line of the to-be-illuminated surface. Accordingly, the three or more low-reflection regions are also dispersedly disposed in the circumferential direction. The fluctuation in the amount of light, which is emitted from the reflection mechanism to the to-be-illuminated surface having the directional property in the reflectance characteristics and is then reflected from the to-be-illuminated surface, can be suppressed. Since each of the three or more reflection regions is a partially-cylindrical region following the virtual cylindrical surface, it can efficiently reflect a bundle of light beams, which is reflected from each reflection region in a bundle of light beams emitted from the surface light source, toward the to-be-illuminated surface, so that the usage efficiency of the bundle of light beams can be improved.

A reflection characteristics measurement device according to a fifteenth aspect includes: the illumination device according to the fourteenth aspect; and a light-receiving mechanism that receives a reflection light generated at a time when the to-be-illuminated surface reflects the light reflected by the reflection mechanism, and then outputs a measurement result of the reflection light.

<1. Colorimeter>

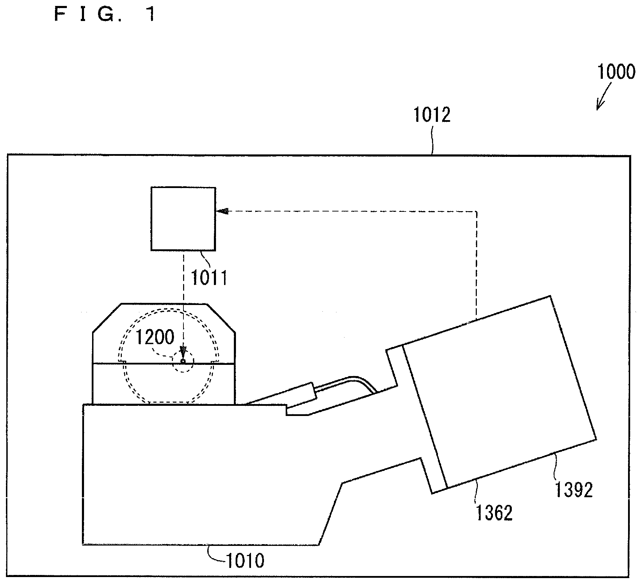

A schematic diagram of Fig. 1 illustrates a colorimeter.

A colorimeter 1000 shown in Fig. 1 measures a spectral reflectivity of a sample. Reflectance characteristics other than the spectral reflectivity may also be measured. For example, a color value may be measured. That is to say, a function of a spectral colorimeter of the colorimeter 1000 may be changed to a function of a reflectance characteristic measuring device other than the spectral colorimeter. For example, the function of the spectral colorimeter of the colorimeter 1000 may be changed to a function of a colorimeter.

The spectral reflectivity is measured by a geometry in which an illumination angle is 45° and a light-receiving angle is 0°. When the spectral reflectivity is measured, a to-be-illuminated surface is illuminated by an annular illumination 0. The to-be-illuminated surface is a surface of the sample. One of or both the geometry and the illumination may be changed.

The colorimeter 1000 includes a measurement mechanism 1010, a controller 1011, and a housing 1012, for example. The measurement mechanism 1010 measures colors. The controller 1011 controls the measurement mechanism 1010. The housing 1012 houses the measurement mechanism 1010 and the controller 1011, for example.

<2. Measurement Mechanism>

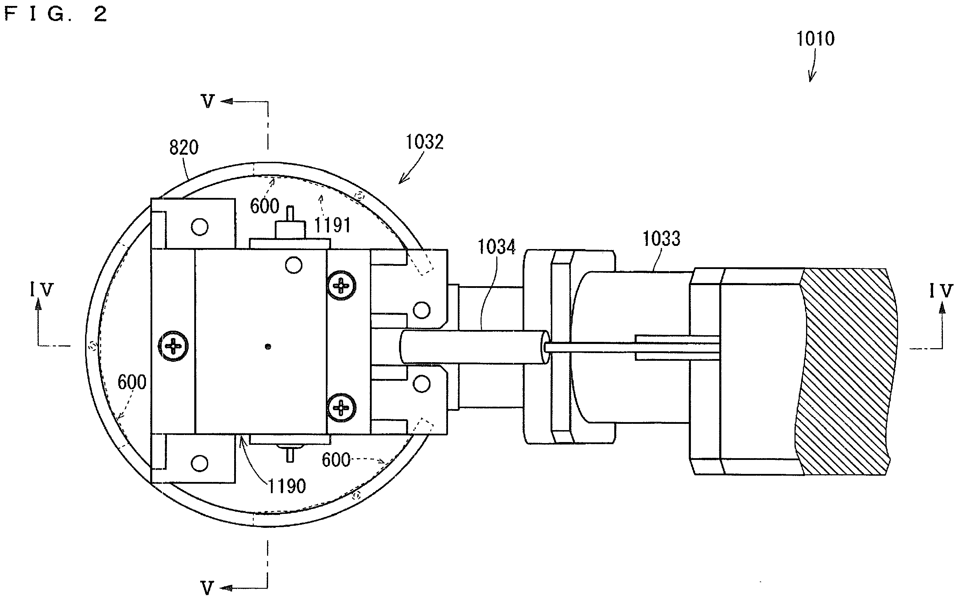

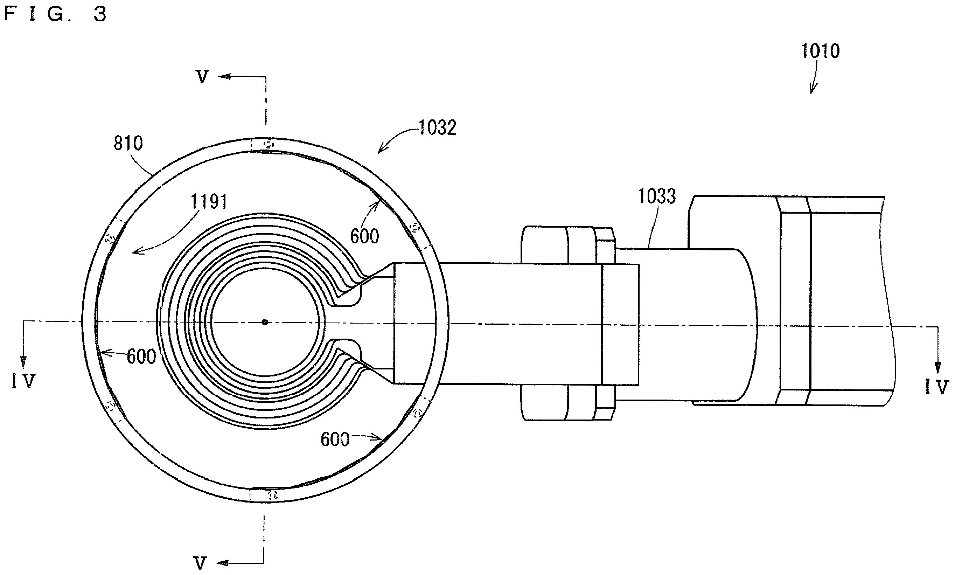

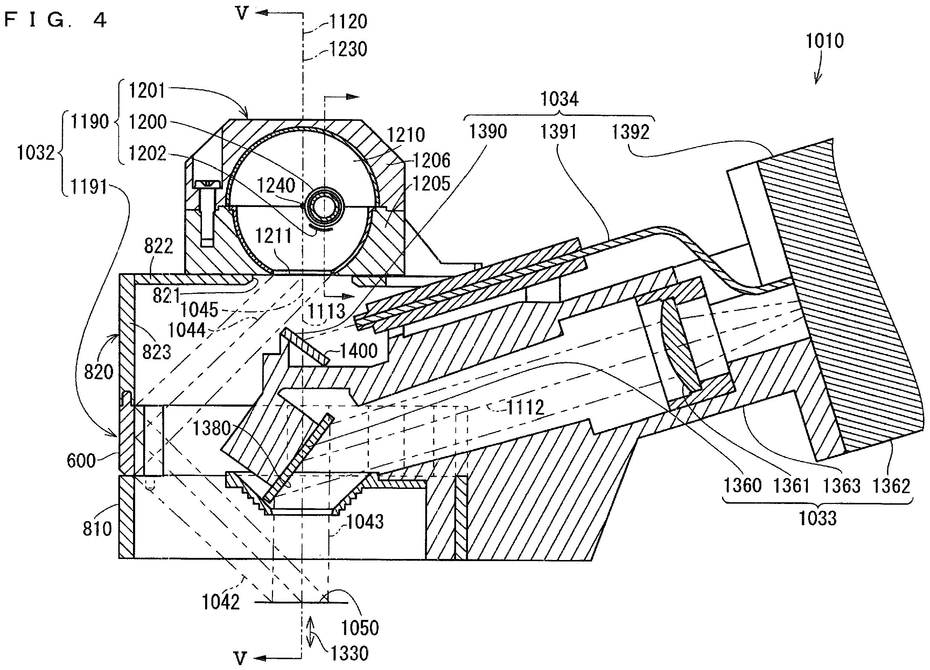

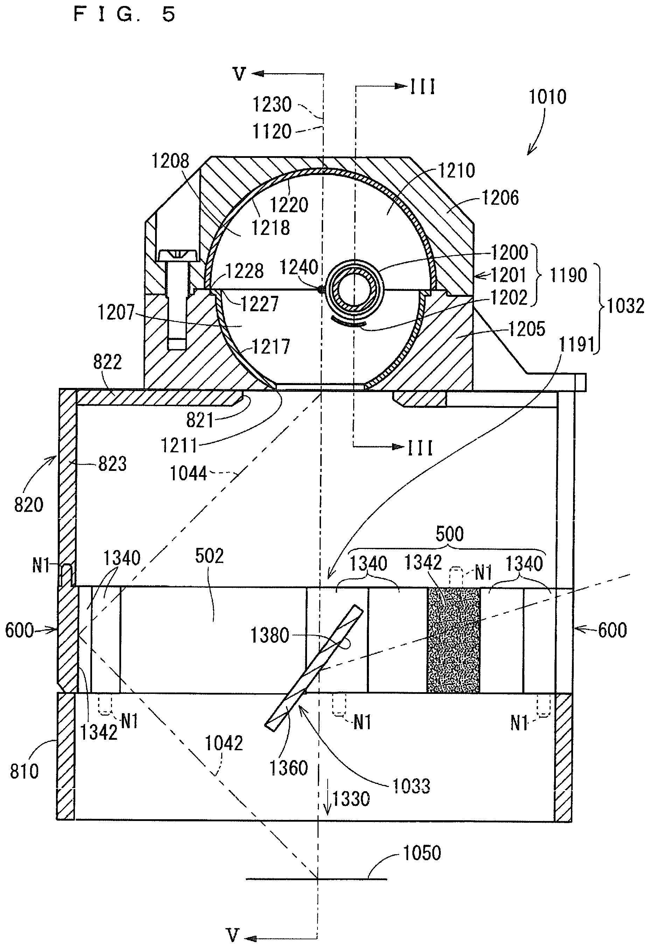

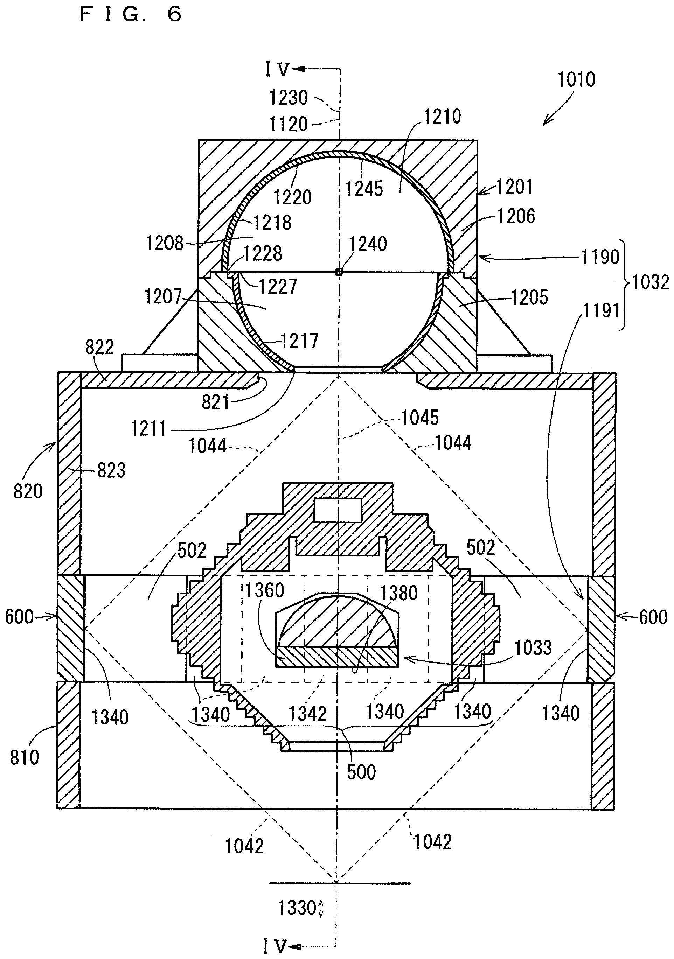

A schematic diagram of Fig. 2 illustrates a top surface of the measurement mechanism. A schematic diagram of Fig. 3 illustrates a lower surface of the measurement mechanism. A schematic diagram of Fig. 4 illustrates a transverse cross-sectional surface of the measurement mechanism. A schematic diagram of Fig. 5 illustrates a transverse cross-sectional surface of the measurement mechanism from which each light-receiving mechanism for color measurement and correction is excluded. A schematic diagram of Fig. 6 illustrates a vertical cross-sectional surface of the measurement mechanism.

The measurement mechanism 1010 shown in Fig. 2 to Fig. 5 includes an illumination mechanism 1032 for color measurement, a light-receiving mechanism 1033 for color measurement, and a light-receiving mechanism 1034 for correction, for example. The illumination mechanism 1032 for color measurement illuminates a to-be-illuminated surface 1050 with an illumination light 1042 from around the to-be-illuminated surface 1050. The to-be-illuminated surface 1050 is a region to be illuminated in the to-be-illuminated surface (also referred to as "the region to be measured"). The light-receiving mechanism 1033 for color measurement receives the reflection light 1043 and outputs a measurement result of the reflection light 1043. The reflection light 1043 is a light in which the illumination light 1042 emitted to the to-be-illuminated surface 1050 is reflected by the to-be-illuminated surface 1050 in a direction of normal line 1120, that is to say, a direction in which the light-receiving angle is 0° . The light-receiving mechanism 1034 for correction receives a light 1045 and outputs a measurement result of the light 1045. The illumination mechanism 1032 for color measurement may be used for a purpose other than the color measurement. When the illumination mechanism 1032 for color measurement is used for the purpose other than the color measurement, the illumination mechanism 1032 may be singly used or may be incorporated into a device other than the colorimeter 1000.

<3. Illumination Mechanism for Color Measurement>

The illumination mechanism 1032 for color measurement shown in Fig. 2 to Fig. 6 includes a light radiation mechanism 1190 and a reflection mechanism 1191, for example, as shown in Fig. 4 to Fig. 6. The light radiation mechanism 1190 emits a light 1044 and the light 1045, for example. The reflection mechanism 1191 causes the light 1044 to become the illumination light 1042. The light radiation mechanism 1190 may be used for a purpose other than the color measurement. When the light radiation mechanism 1190 is used for the purpose other than the color measurement, the light radiation mechanism 1190 may be singly used or may be incorporated into a device other than the colorimeter 1000.

<4. Light Radiation Mechanism>

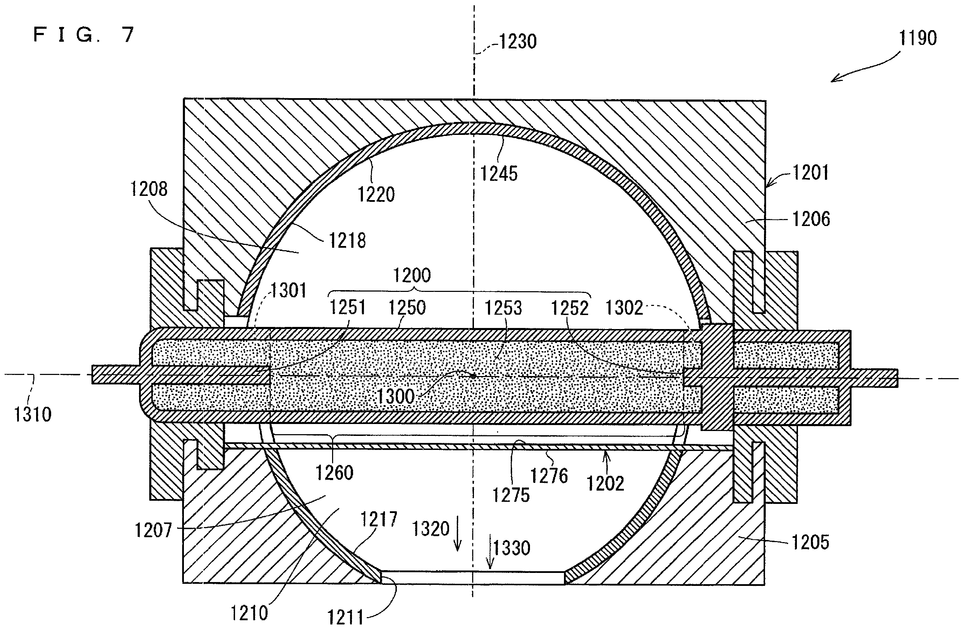

Fig. 7 illustrates a cross section of the light radiation mechanism.
The light radiation mechanism 1190 shown in Fig. 4 to Fig. 7 includes a straight-tube type xenon lamp 1200, an integrating sphere 1201, and a baffle 1202, for example. The straight-tube type xenon lamp 1200 emits light. The integrating sphere 1201 uniformizes the light. The baffle 1202 suppresses an output of light which is not uniformized yet.
A spherical space 1210 formed in the integrating sphere 1201 is specified by an inner surface 1220 of the integrating sphere 1201. The integrating sphere 1201 is formed by integrating hemispheres 1205 and 1206 screwed to each other. The space 1210 is deemed to have the spherical shape when a sphere having a spherical surface following a main part of the inner surface 1220 can be defined. Hemispherical spaces 1207 and 1208 formed by the integrating hemispheres 1205 and 1206 are specified by hemispherical inner surfaces 1217 and 1218. A white matt coating (light diffusion material) is applied to each of the inner surfaces 1217 and 1218. Each of the spaces 1207 and 1208 is deemed to have the hemispherical shape when the hemisphere having a hemispherical surface following each of main parts of the inner surfaces 1217 and 1218 can be defined. A diameter of the hemisphere defined by the space 1207, that is to say, a diameter of the hemisphere following the main part of the inner surface 1217 is smaller than a diameter of the hemisphere defined by the space 1208, that is to say, a diameter of the hemisphere following the main part of the inner surface 1218. The space 1207 opens in one end surface of the integrating hemisphere 1205. The other end surface of the integrating hemisphere 1206 is in direct contact with the one end surface. The space 1208 opens in the other end surface of the integrating hemisphere 1206. Each opening diameter of the openings 1227 and 1228 of the spaces 1207 and 1208 is equal to each diameter of the hemispheres defined by the spaces 1207 and 1208. The integrating hemispheres 1205 and 1206 are coupled to each other in a state where the one end surface of the integrating hemisphere 1205 and the other end surface of the integrating hemisphere 1206 are in direct contact with each other so that each center of the openings 1227 and 1228 coincides with each other. Each center of the openings 1227 and 1228 is a center 1240 of the integrating sphere 1201.
A round emission port 1211 formed in the integrating sphere 1201 is specified by the inner surface 1217 of the integrating hemisphere 1205. The emission port 1211 connects the space 1210 and an outside of the integrating sphere 1201. A diameter of the emission port 1211 is stable. The emission port 1211 may widen from one end on a side of the space 1210 toward the other end on a side of the outside of the integrating sphere 1201. The emission port 1211 is deemed to have the round shape when a rotation symmetric body can be defined.
The space 1210, that is to say, the spaces 1207 and 1208 and the emission port 1211 have a common central axis 1230. A symmetrical axis of the sphere and hemisphere following each main part of the inner surfaces 1220, 1217, and 1218 and a symmetrical axis of the rotation symmetric body defined by the emission port 1211 are located on the central axis 1230. A center 1240 of the integrating sphere 1201 is also located on the central axis 1230. The central axis 1230 coincides with the normal line 1120 passing through a center of the to-be-illuminated surface 1050. That is to say, the light radiation mechanism 1190 is disposed on the normal line 1120 of the to-be-illuminated surface 1050.

The space 1210 is deemed to have the spherical shape when the rotation symmetric body having the central axis 1230 as the symmetrical axis can be defined by the space defined by the main part of the inner surface 1220, that is to say, the space formed by coupling each hemisphere defined by the main parts of the inner surfaces 1217 and 1218. The inner surface 1220 may have a slight unevenness, or a slight hole may be exposed to the inner surface 1220. The emission port 1211 exposed to the inner surface 1220 also corresponds to the hole.

As described above, the diameter of the hemisphere defined by the space 1207, that is to say, the diameter of the opening 1227 is smaller than the diameter of the hemisphere defined by the space 1208, that is to say, the diameter of the opening 1228. Accordingly, a line connecting each point on each reflection surface 1340 described hereinafter included in the reflection mechanism 1191 and each point on a periphery of the opening 1228 is shielded by a peripheral part of the opening 1227. Therefore, the periphery of the opening 1228 of the space 1208 is not seen from each reflection surface 1340.

For example, when each diameter of the openings 1227 and 1228 is equal to each other, the white matt coating is easily peeled off in a connection part of the openings. A reflection ratio of light in the connection part decreases compared with a surrounding area of the connection part due to the peeling of the coating, for example. Therefore, when the connection part is seen from each reflection surface 1340 through the emission port 1211, unevenness of an amount of light emitted from the emission port 1211 to each reflection surface 1340 occurs.

In the meanwhile, when the diameter of the opening 1227 is smaller than that of the opening 1228, the periphery of the opening 1227 does not contact the other end surface of the integrating hemisphere 1206, so that the reflection ratio of the periphery of the opening 1227 is substantially equal to that of the other part. In contrast, the periphery of the opening 1228 is a corner part where the one end surface of the integrating hemisphere 1205 and the inner surface 1218 are in direct contact with each other at an angle of substantially 90° , so that the reflection ratio in the periphery of the opening 1228 decreases compared with the other part. However, as described above, the periphery of the opening 1227 is seen from each reflection surface 1340, and the periphery of the opening 1228 is not seen from each reflection surface 1340. The above configuration enables a suppression of the unevenness of the amount of light emitted from the emission port 1211 to each reflection surface 1340 due to the decrease in the reflection ratio in the periphery of the opening 1228.

However, even when each diameter of the openings 1227 and 1228 is equal to each other, a function of uniformizing the light performed by the integrating sphere 1201 is not lost, and usability of the light radiation mechanism 1190 is not thereby lost.

The inner surface 1220, that is to say, the inner surfaces 1217 and 1218 have a diffusion reflection surface 1245. A whole inner surface 1220 is preferably the diffusion reflection surface 1245, however, the inner surface 1220 may slightly include a surface which is not the diffusion reflection surface 1245. The diffusion reflection surface 1245 is a surface coated with a white matt coating. The white matt coating includes a resin, a white pigment, a matt material, or the like. The resin is an acrylic resin, for example. The white pigment is a powder of titanium oxide, zinc oxide, barium sulfide, calcium carbonate, or the like. The matt material is a fine particle of silica, calcium carbonate, calcium phosphate, or the like. The white matt coating may be replaced with an achromatic matt coating other than white color. The diffusion reflection surface 1245 may be formed by roughening the inner surface 1220.

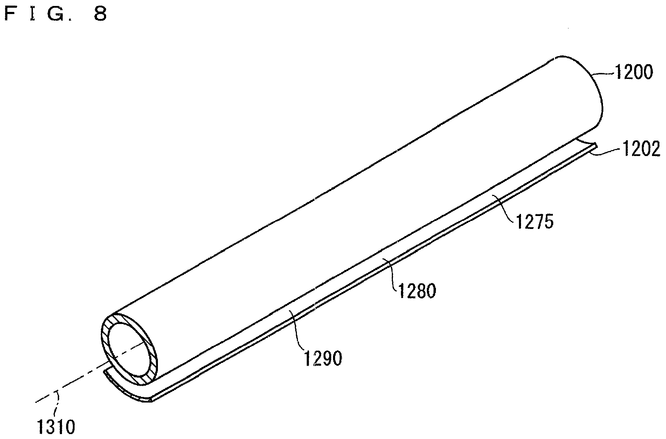

A schematic diagram of Fig. 8 is a perspective view of a part of straight-tube type xenon lamp and a part of baffle.

The straight-tube type xenon lamp (also referred to as "the straight-tube type light source") 1200 shown in Fig. 4, Fig. 5, Fig. 7, and Fig. 8 includes an arc tube 1250, an electrode 1251, an electrode 1252, and a sealed gas 1253, for example, as shown in Fig. 7. The electrode 1251 is sealed to one end of the arc tube 1250. The electrode 1252 is sealed to the other end of the arc tube 1250. The sealed gas 1253 is sealed in the arc tube 1250. A main component of the sealed gas 1253 is xenon gas. The straight-tube type xenon lamp 1200 is disposed to extend in a tube axis direction in which a tube axis 1310 extends. The straight-tube type xenon lamp 1200 includes a discharge section 1260. The discharge section 1260 is located between the electrode 1251 and the electrode 1252. When voltage is applied between the electrode 1251 and the electrode 1252, discharge is generated in the discharge section 1260, and the light is emitted from the straight-tube type xenon lamp 1200. The straight-tube type xenon lamp 1200 has advantages that it is inexpensive and has a large amount of light emitted over an entire visible range. The above advantage contributes to a decrease in a manufacturing cost of the colorimeter 1000 and an improvement of a signal-to-noise ratio of the color measurement. A straight-tube type HID lamp (High Intensity Discharge lamp) such as a metal halide lamp UCM manufactured by USHIO LIGHTING, INC., for example, may be used as a straight-tube type light source replaced with the straight-tube type xenon lamp 1200.

A concavo-convex structure which can be fitted with a concavo-convex structure of both end parts of the xenon lamp 1200 is formed in one end part and the other end part of the integrating hemispheres 1205 and 1206 in the direction of the tube axis 1310. The integrating hemispheres 1205 and 1206 are fixed to each other with the xenon lamp 1200 therebetween so that the above fitting structures are fitted with each other. The xenon lamp 1200 is thereby fixed to the integrating sphere 1201. The straight-tube type xenon lamp 1200 passes across the space 1210. When the straight-tube type xenon lamp 1200 passes across the space 1210, the straight-tube type xenon lamp 1200 can be made large and the integrating sphere 1201 can be made small at the same time. The increase in the size of the straight-tube type xenon lamp 1200 contributes to an increase in the amount of light emitted from the straight-tube type xenon lamp 1200 and an extension of life of the straight-tube type xenon lamp 1200.

The baffle 1202 is located between the discharge section 1260 and the emission port 1211. The baffle 1202 prevents a part or all of the emission port 1211 from being seen through from the discharge section 1260, and preferably prevents all of the emission port 1211 from being seen through from the discharge section 1260. A state where one position is seen through (also referred to "seen") from the other position indicates that there is no shielding object which shields a light beam on a straight line connecting the one position and the other position, so that the light beam directly arrives from the one position to the other position. On the contrary, a state where one position is not seen through (also referred to " not seen") from the other position indicates that there is a shielding object which shields a light beam on a straight line connecting the one position and the other position, so that the light beam cannot directly arrive from the one position to the other position. The light beam which is directly directed to the emission port 1211 from the discharge section 1260 is shielded by the baffle 1202, and suppressed is the emission of the light, which is emitted from the discharge section 1260, from the emission port 1211 without being diffused and reflected by the diffusion reflection surface 1245, so that stray light is suppressed and an accuracy of the color measurement is enhanced. When the light emitted from the discharge section 1260 is diffused and reflected by the diffusion reflection surface 1245 and is subsequently emitted from the emission port 1211, the uniformized light 1045 is received by the light-receiving mechanism 1034 for correction, and a fluctuation of the light 1044 emitted from the emission port 1211 is appropriately monitored. On the contrary, when light emitted from the discharge section 1260 is emitted from the emission port 1211 without being diffused and reflected by the diffusion reflection surface 1245, the fluctuation of the light 1045 emitted from the emission port 1211 is not appropriately monitored under an influence of a defect of the straight-tube type xenon lamp 1200 in which horizontal light distribution characteristics are not even,. However, even when the baffle 1202 is omitted, the function of uniformizing the light performed by the integrating sphere 1201 is not lost, and the usability of the light radiation mechanism 1190 is not thereby lost.

The baffle 1202 has a partially-cylindrical shape and extends in a direction parallel to the direction in which the discharge section 1260 extends. The partially-cylindrical shape indicates a shape formed by cutting a cylinder from one position to the other position in a circumferential direction. The shape is deemed to have the partially-cylindrical shape when the shape follows the partial cylinder, and the shape may have a slight concavity and convexity with regard to the partial cylinder. An inner peripheral surface 1275 of the baffle 1202 is directed to the discharge section 1260. An outer peripheral surface 1276 of the baffle 1202 is directed to the emission port 1211. The shape of the baffle 1202 may be changed.

A surface 1280 of the baffle 1202 includes a diffusion reflection surface 1290. A whole surface 1280 is preferably the diffusion reflection surface 1290, however, the surface 1280 may slightly include a surface which is not the diffusion reflection surface 1290. However, even when the surface of the baffle 1202 does not have the diffusion reflection surface 1290, the function of uniformizing the light performed by the integrating sphere 1201 is not lost, and the usability of the light radiation mechanism 1190 is not thereby lost.

When the straight-tube type xenon lamp 1200 emits the light, the light travels in the space 1210 and the emission port 1211 in sequence and is ultimately emitted outside the integrating sphere 1201. The light is diffused and reflected by the diffusion reflection surface 1245 at least once while it travels in the space 1210. A large portion of the light is repeatedly diffused and reflected by the diffusion reflection surface 1245 while it travels in the space 1210. Since the light is diffused and reflected by the diffusion reflection surface 1245 and then emitted from the emission port 1211, the light emitted from the light radiation mechanism 1190 is uniformized, and the light radiation mechanism 1190 substantially has vertical light distribution characteristics conforming to Lambert's cosine law. When the light radiation mechanism 1190 has the vertical light distribution characteristics conforming to Lambert's cosine law, a light intensity of the light emitted in a direction forming an angle $\theta$ with the central axis 1230 is proportional to a cosine $\theta$ of a cosine of the angle $\theta$.

The straight-tube type xenon lamp 1200 has a defect that the vertical light distribution characteristics do not conform to the Lambert's cosine law. The straight-tube type xenon lamp 1200 also has a defect that the horizontal light distribution characteristics is not even. However, these defects are mitigated to the extent that they do not substantially cause a problem.

<5. Arrangement of Straight-Tube Type Xenon Lamp>

One end 1301 and the other end 1302 of the discharge section 1260 follow the inner surface 1220 and is preferably located on the defined spherical surface of the sphere. When the one end 1301 and the other end 1302 of the discharge section 1260 follow the inner surface 1220, a protrusion of the straight-tube type xenon lamp 1200 from the space 1210 decreases and the light radiation mechanism 1190 is thereby downsized. Moreover, since a large portion of the discharge section 1260 is housed in the space 1210 and a large portion of the light emitted from the straight-tube type xenon lamp 1200 is emitted to the space 1210, the efficiency of the light radiation mechanism 1190 is enhanced.

The one end 1301 and the other end 1302 of the discharge section 1260 are deemed to follow the inner surface 1220 when the one end 1301 and the other end 1302 of the discharge section 1260 are located on the defined spherical surface of the sphere or when the one end 1301 and the other end 1302 of the discharge section 1260 are located close to the inner surface 1220 at a slight distance from the inner surface 1220.

A center 1300 of the discharge section 1260 is, in more detail, a center of a part of the discharge section 1260 included in the space 1210. The center 1300 is located on the tube axis 1310 of the straight-tube type xenon lamp 1200, and distances from the electrodes 1251 and 1252 to the center 1300 are equal to each other. The xenon lamp 1200 is disposed to be shifted from the central axis 1230 in a direction crossing the normal line 1120 of the to-be-illuminated surface 1050 so that the center 1240 of the integrating sphere 1201 is not located on the tube axis 1310 of the xenon lamp 1200. When the reflection mechanism 1191 includes an even number of mirror blocks 600, the amount of light emitted from the xenon lamp 1200 to each mirror can be uniformized by bridging the mirror blocks 600 in an extension direction of the straight tube of the xenon lamp 1200. When the reflection mechanism 1191 includes an odd number of mirror blocks 600, the amount of light emitted from the emission port 121 to each mirror block 600 can be easily uniformized by shifting the xenon lamp 1200 from the center 1240 as described above.

The center 1300 of the part of the discharge section 1260 included in the space 1210 is preferably located out of a region in the space 1210 from which any one of three reflection regions is seen via the emission port 1211.

The emission port 1211 is located in a tube diameter direction 1320 away from the tube axis 1310 when seen from the discharge section 1260. The discharge section 1260 is preferably perpendicular to a direction of the central axis 1230, that is to say, an axial direction 1330 and extends in a plane parallel to the to-be-illuminated surface 1050. The center 1300 of the discharge section 1260 may be located on the central axis 1230. Since the LED light source is also the surface light source, the LED light source may also be used instead of the light radiation mechanism 1190.

<6. Reflection Mechanism>

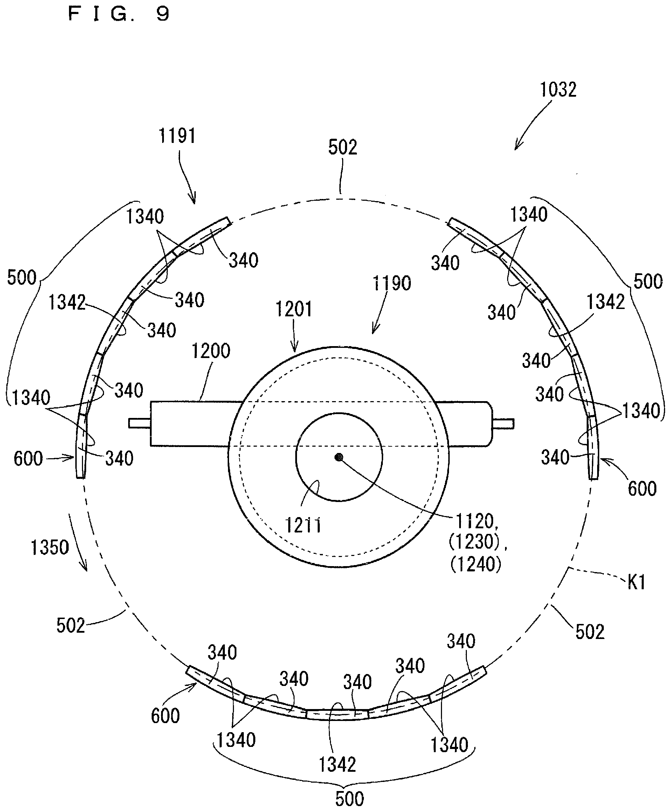

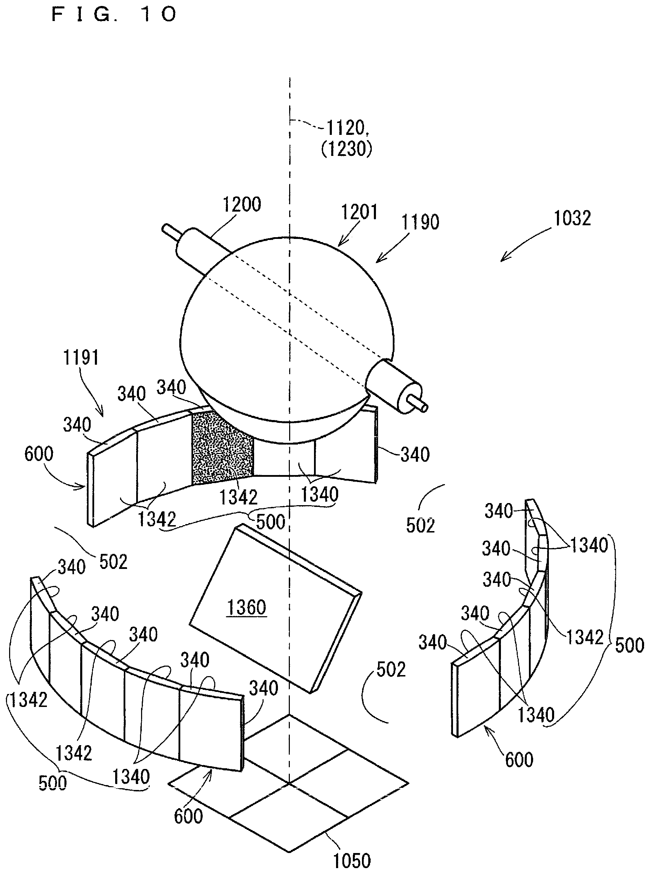

Schematic diagrams of Fig. 9 and Fig. 10 are a top view and a perspective view illustrating a partial configuration of the illumination mechanism 1032.

The reflection mechanism 1191 is provided between the light radiation mechanism 1190 and the to-be-illuminated surface 1050 so as to surround the normal line 1120. The reflection mechanism 1191 causes the light 1044 emitted from the light radiation mechanism 1190 to become the illumination light 1042 and reflects it toward the to-be-illuminated surface 1050.

The reflection mechanism 1191 is configured to have three or more (three in the illustrated example) mirror blocks 600. Each mirror block 600 is dispersedly disposed along a virtual cylindrical surface K1 surrounding the normal line 1120 in a circumferential direction 1350 of the virtual cylindrical surface K1. Each mirror block 600 is a plate-like member having a partially-cylindrical shape to follow the virtual cylindrical surface K1. A protruding portion N1 (Fig. 5) protrudes in a direction of the normal line 1120 from both end surfaces of each mirror block 600 in the direction of the normal line 1120. A plurality of protruding portions N1 are provided on at least one end surface of the both end surfaces.

The measurement mechanism 1010 further includes cylindrical members 810 and 820 provided around the normal line 1120.

The cylindrical member 810, the reflection mechanism 1191, and the cylindrical member 820 are provided in this order from a side of the to-be-illuminated surface 1050. The cylindrical members 810 and 820 and the reflection mechanism 1191 are located between the to-be-illuminated surface 1050 and the light radiation mechanism 1190. Diameters of the cylindrical members 810 and 820 and a diameter of the virtual cylindrical surface K1 are equal to each other.

The cylindrical member 820 includes a cylindrical side wall 823 centering on the normal line 1120 and a discoid cover part 822 for covering an opening part of the side wall 823 on a side of the light radiation mechanism 1190. A round opening part 821 centering on the normal line 1120 is formed in a central part of the cover part 822. The opening part 821 has a diameter larger than the emission port 1211 of the integrating sphere 1201. The space 1210 of the integrating sphere 1201 and an inner space of the cylindrical member 820 communicate with each other via the emission port 1211 and the opening part 821.

One end surface, which is located on a side of the light radiation mechanism 1190, of both end surfaces of the cylindrical member 810 is in direct contact with the other end surface, which is located on a side of the to-be-illuminated surface 1050, of the both end surfaces of each mirror block 600 in the direction of the normal line 1120. A hole part which can be fitted with the protruding portion N1 provided on the other end surface of the mirror block 600 is provided in the one end surface of the cylindrical member 810. The hole part and the protruding portion N1 of the mirror block 600 are fitted with each other, and the cylindrical member 810 and the mirror block 600 are thereby fixed to each other.

The one end surface, which is located on the side of the light radiation mechanism 1190, of the both end surfaces of each mirror block 600 is in direct contact with the other end surface, which is located on the side of the to-be-illuminated surface 1050, of the both end surfaces of the side wall 823 of the cylindrical member 820. A hole part which can be fitted with the protruding portion N1 provided on the one end surface of the mirror block 600 is provided in the other end surface of the side wall 823. The hole part and the protruding portion N1 are fitted with each other, and the mirror block 600 and the cylindrical member 820 are thereby fixed to each other.

An inner peripheral surface of the mirror block 600, that is to say, a surface facing the normal line 1120 is a reflection region 500 which reflects the light 1044 toward the to-be-illuminated surface 1050. The mirror blocks 600 adjacent to each other in the three or more mirror blocks 600 are provided along the virtual cylindrical surface K1 at a distance therebetween. A non-reflection region 502 which does not reflect the light 1044 toward the to-be-illuminated surface 1050 is located between the adjacent mirror blocks 600.

That is to say, three or more (three in the illustrated example) reflection regions 500 and three or more (three in the illustrated example) non-reflection regions 502 are disposed in the reflection mechanism 1191. The reflection region 500 and the non-reflection region 502 are alternately disposed along the virtual cylindrical surface K1 surrounding the normal line 1120 in the circumferential direction 1350 of the virtual cylindrical surface K1.

Each reflection region 500 is a partially-cylindrical region following the virtual cylindrical surface K1, and the three or more non-reflection regions 502 are dispersedly disposed along the virtual cylindrical surface K1 so as to surround the normal line 1120 in the circumferential direction 1350 of the virtual cylindrical surface K1. Accordingly, the three or more reflection regions 500 are also dispersedly disposed along the virtual cylindrical surface K1 so as to surround the normal line 1120 in the circumferential direction 1350. The three or more non-reflection regions 502 are preferably disposed at regular intervals in the circumferential direction 1350. A shape of the plurality of reflection regions 500 in the reflection mechanism 1191 preferably has a three-fold or more than three-fold rotational symmetry (three-fold in the example of Fig. 9) rotating around the central axis 1230.

The plurality of (four in the illustrated example) reflection surfaces 1340 each of which reflects the light 1044 toward the to-be-illuminated surface 1050 are provided in each reflection region 500 of each mirror block 600. The plurality of reflection surfaces 1340 are arranged along the virtual cylindrical surface K1 in the circumferential direction 1350 of the virtual cylindrical surface K1.

Each reflection surface 1340 has a mirror surface and reflects the light 1044. Each reflection surface 1340 is formed to have a curved surface extending in the direction of the normal line 1120, and a cross section perpendicular to the normal line 1120 forms an arc-like curved line convex toward a side of the normal line 1120. The cross section may form an arc-like curved line convex toward an opposite side of the normal line 1120. Each reflection surface 1340 may be a planate reflection surface.

Each reflection surface 1340 faces inward in a radial direction close to the central axis 1230. Each reflection surface 1340 is disposed so that the light 1044 becomes an incident light and the reflection light becomes the illumination light 1042. The illumination light 1042 enters the to-be-illuminated surface 1050 from a direction forming the illumination angle 45°. The direction forming the illumination angel 45° is a direction forming 45° with the normal line 1120 of the to-be-illuminated surface 1050.

When the vertical light distribution characteristics of the light radiation mechanism 1190 conforms to Lambert's cosine law and the light 1044 emitted from the emission port 1211 in a direction forming 45° with the central axis 1230 becomes the illumination light entering the to-be-illuminated surface 1050 from the direction forming the illumination angel 45°, illumination intensity does not significantly fluctuate even when the to-be-illuminated surface 1050 is moved in the axial direction 1330 from a reference position, and stability of color measurement is thereby enhanced.

Each mirror block 600 includes a plurality of (five in the illustrated example) plate-like members 340 arranged in a row in the circumferential direction 1350. That is to say, the reflection mechanism 1191 includes the plurality of members 340 arranged in a row in the circumferential direction 1350 for each of the plurality of reflection regions 500. Each of the plurality of members 340 includes an opposed surface facing the normal line 1120. The plurality of reflection surfaces 1340 are formed in the opposed surface in the at least one member (four in the illustrated example) 340 in the plurality of members 340. The members 340 adjacent to each other in the plurality of members 340 are preferably coupled to each other so that each direction of the plurality of reflection surfaces 1340 is fixed to each other. The plurality of members 340 are coupled to each other as described above to form the mirror block 600.

A non-reflection part 1342 which does not reflect the light 1044 toward the to-be-illuminated surface 1050 is preferably disposed in a part of each of the three or more reflection regions 500. That is to say, the three or more non-reflection parts 1342 are disposed in the reflection mechanism 1191. Each non-reflection part 1342 is formed by applying a black coating or a flocked paper on a part of the reflection region 500, for example. The non-reflection part 1342 may also be achieved by a through hole provided in a part of the reflection region 500. The three or more non-reflection parts 1342 are dispersedly disposed to surround the normal line 1120 in the circumferential direction 1350. The three or more non-reflection parts 1342 are preferably disposed at regular intervals in the circumferential direction 1350.

Each non-reflection part 1342 preferably occupies a range, in the reflection region 500, larger than a range occupied by the one reflection surface, in the reflection region 500, in the plurality of reflection surfaces 1340 of each reflection region 500.

The part of the reflection region 500 other than the non-reflection part 1342 is preferably provided to be larger than the non-reflection part 1342.

The non-reflection part 1342 also includes, as described above, the part to which the white coating or the flocked paper is applied, for example. A reflection ratio in the non-reflection part in the above case is preferably set to 10% or less, and more preferably set to 5% or less, for example. Even when a low reflection part having a reflection ratio of around 10% to around 30% is adopted instead of the non-reflection part 1342, the usability of the present invention is not lost. Moreover, even when all of the inner periphery surfaces of the members 340 included in the reflection region 500 are the reflection surfaces 1340, the usability of the present invention is not lost.

The non-reflection region 502 in the illustrated example is preferably a region in a space between the adjacent mirror blocks 600. However, even when the non-reflection region 502 is achieved by the region in which the black coating or the flocked paper is applied to the inner periphery surface of the plate-like member having the partially-cylindrical shape so that the reflection ratio becomes 10% or less, more preferably 5% or less, the usability of the present invention is not lost. A low-reflection region having a reflection ratio at a time of reflecting the light 1044 toward the to-be-illuminated surface 1050 lower than the reflection region 500 may be adopted instead of the non-reflection region 502. The reflection ratio in the low-reflection region is 10% to 30%, for example.

<7. Light-Receiving Mechanism for Color Measurement>

The light-receiving mechanism 1033 for color measurement shown in Fig. 2 to Fig. 4 includes a mirror 1360, a lens 1361, a spectrometry mechanism 1362, and a lens tube 1363 as shown in Fig. 4. The mirror 1360 and the lens 1361 is hold by an inner wall of the lens tube 1363, and the spectrometry mechanism 1362 is attached to an end part of the lens tube 1363. The mirror 1360 reflects the light 1043. The lens 1361 converges a bundle of light beams of the reflection light 1043. The spectrometry mechanism 1362 outputs a signal in accordance with an amount of light of each wavelength component of the reflection light 1043.

The mirror 1360 is located on the normal line 1120. A reflection surface 1380 of the mirror 1360 faces a direction located midway between a direction directed to the to-be-illuminated surface 1050 and a direction directed to the spectrometry mechanism 1362. The lens 1361 is located between the reflection surface 1380 and the spectrometry mechanism 1362.

The reflection light 1043 travels along a light axis 1112. The reflection light 1043 is generated by the to-be-illuminated surface 1050 reflecting the illumination light 1042. The reflection light 1043 is emitted from the to-be-illuminated surface 1050 in a direction in which the light-receiving angle is 0°, is reflected by the mirror 1360, passes through the lens 1361, and is then received by the spectrometry mechanism 1362. The direction in which the light-receiving angle is 0° is a direction forming 0° with the normal line 1120 of the to-be-illuminated surface 1050. The spectrometry mechanism 1362 outputs the signal in accordance with the amount of light of each wavelength component of the reflection light 1043. The signal being output by the spectrometry mechanism 1362 becomes a result of the measurement of the reflection light 1043. When the reflection light 1043 is reflected by the mirror 1360, the light axis 1112 is inflected. When the reflection light 1043 passes the lens 1361, the bundle of light beams of the reflection light 1043 is converged.

The reflection light 1043 travels from the to-be-illuminated surface 1050 to the reflection surface 1380 along the light axis 1112 in the direction in which the light-receiving angle is 0° and is then reflected by the reflection surface 1380. The reflected reflection light 1043 travels from the reflection surface 1380 along the light axis 1112, passes through the lens 1361, and then reaches the spectrometry mechanism 1362.

The mirror 1360 may be replaced with the other type of bending optical element. For example, the mirror 1360 may be replaced with a prism. It is also applicable to add the bending optical element other than the mirror 1360 to further inflect the light axis 1112. An optical system made up of the mirror 1360 and the lens 1361 may be replaced with the other type of optical system which inflects the light axis 1112 and converges the bundle of light beams of the reflection light 1043. For example, the optical system made up of the mirror 1360 and the lens 1361 may be replaced with an optical system made up of a mirror having a concave reflection surface. When the spectral colorimeter included in the colorimeter 1000 is changed to the colorimeter, the spectrometry mechanism 1362 may be replaced with a mechanism for measuring tristimulus values.

<8. Light-Receiving Mechanism for Correction>

The light-receiving mechanism 1034 for correction shown in Fig. 2 and Fig. 4 includes a mirror 1390, an optical fiber 1391, and a spectrometry mechanism 1392 as shown in Fig. 4. The spectrometry mechanism 1392 is caused to be in common with the spectrometry mechanism 1362.

The light 1045 travels along a light axis 1113. The light 1045 is emitted from the emission port 1211 in a direction forming 0° with the central axis 1230, reflected by the mirror 1390, guided by the optical fiber 1391, and received by the spectrometry mechanism 1392. The spectrometry mechanism 1392 outputs the signal in accordance with the amount of light of each wavelength component of the light 1045.

The mirror 1390 may be replaced with the other type of bending optical element. For example, the mirror 1390 may be replaced with a prism. The bending optical element other than the mirror 1390 may be added. The optical fiber 1391 may be replaced with the other type of light guiding mechanism. For example, the optical fiber 1391 may be replaced with the bending optical element. It is also applicable that the optical fiber 1391 is omitted and the light 1045 travels straight from the reflection surface 1400 to the spectrometry mechanism 1392.

When the measurement for correction is performed on the light 1045 emitted from the emission port 1211 in the direction forming 0° with the central axis 1230, there is no need to form an emission port other than the emission port 1211 in the integrating sphere 1201 to obtain the light on which the measurement for correction is performed, so that the efficiency of the light radiation mechanism 1190 is enhanced.

<9. Controller>

The controller 1011 shown in Fig. 1 includes a built-in computer and a control circuit, for example, and causes the built-in computer to execute a firmware. All or a part of the processing executed by the built-in computer may be achieved by a hardware which does not execute a program.

The controller 1011 controls the measurement mechanism 1010. The controller 1011 controls a lighting of the straight-tube type xenon lamp 1200 and obtains a measurement result from the spectrometry mechanism 1362 and the spectrometry mechanism 1392. The controller 1011 obtains a color measurement information from a measurement result obtained from the spectrometry mechanism 1362. The controller 1011 performs a correction for reflecting the measurement result obtained from the spectrometry mechanism 1392 at the time of obtaining the color measurement information. Accordingly, the influence of the fluctuation of the light emitted by the light radiation mechanism 1190 on the color measurement information is mitigated. The color measurement information is a spectral spectrum, a color value, or the like.

<10. Reflection Light Reflected from To-be-illuminated Surface Having Directional Property in Reflectance Characteristics>

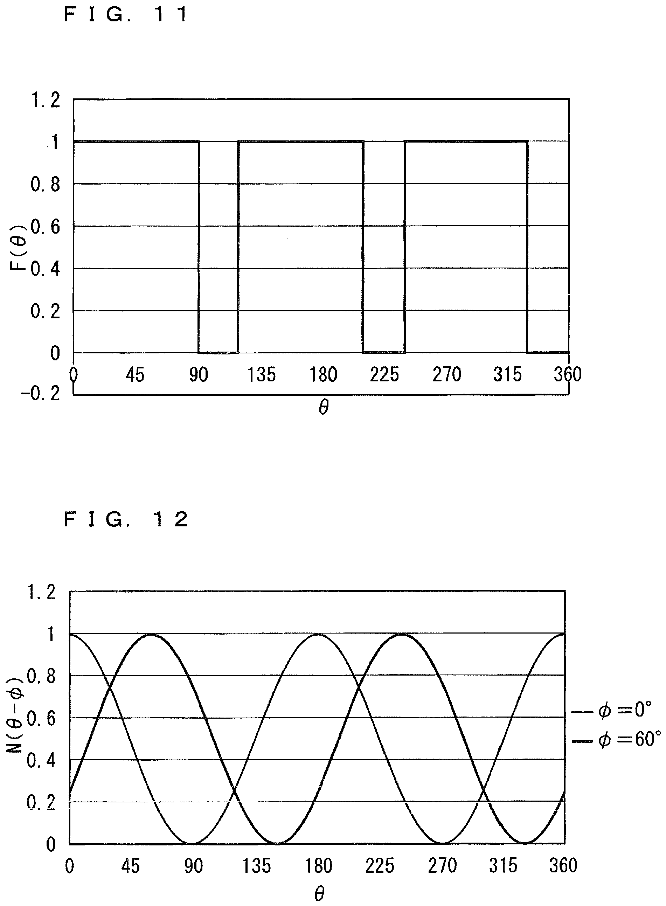

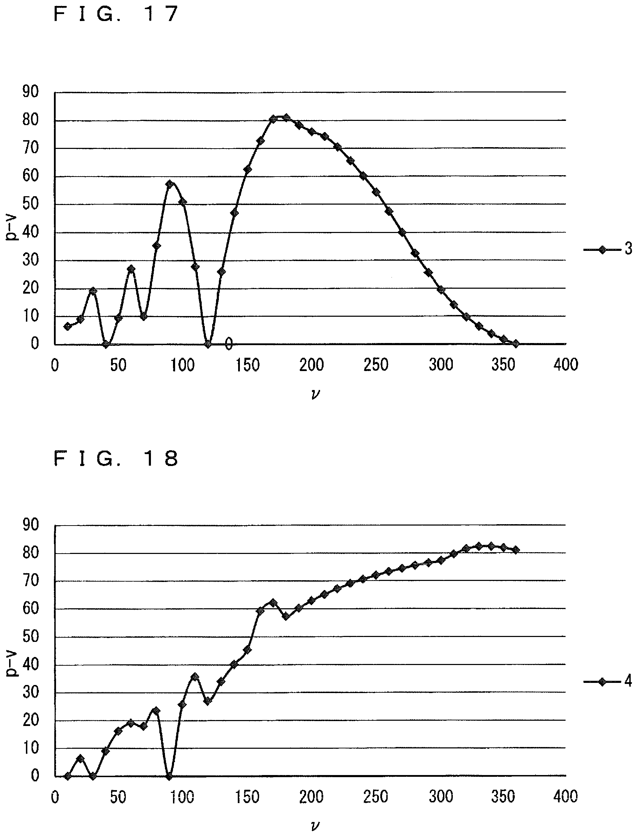

Described hereinafter is the fluctuation of the reflection light 1043 reflected from the to-be-illuminated surface 1050 having the directional property in the reflectance characteristics, for example, with reference to Fig. 11 to Fig. 18.

Fig. 11 is a view schematically showing one example of a fluctuation in an amount of illumination light in each orientation θ of the illumination light 1042 in a graph form. The fluctuation in the amount of illumination light is expressed as a periodic signal F (θ) in which each orientation θ is a variable. The orientation θ corresponds to a rotation angle θ at which a reference plane having the normal line 1120 of the to-be-illuminated surface 1050 as one side is rotated from a predetermined reference position around the normal line 1120. The periodic signal F (θ) is a signal indicating the fluctuation in the amount of light, which is emitted from the reflection mechanism 1191 to the to-be-illuminated surface 1050 along the reference plane in the illumination light 1042, normalized to a value within a range of 0 to 1.

When the reference plane of the orientation θ crosses the reflection surface 1340, a value of the periodic signal F (θ) becomes 1, and when it does not cross, the value of the periodic signal F (θ) becomes 0.

Fig. 12 schematically shows the fluctuation in the reflection ratio of the light reflected from the to-be-illuminated surface 1050 in the direction of light-receiving angle 0° at the time of emitting the illumination light 1042 to the to-be-illuminated surface 1050 along the reference plane in each orientation θ as a periodic noise N (θ - φ) in which the orientation θ is a variable. When the amount of light emitted from each direction is stable, the fluctuation in the reflection ratio is provided as the fluctuation in the amount of reflection light. The periodic noise N (θ - φ) is normalized to 0 or 1. The direction φ of the to-be-illuminated surface 1050 corresponds to the rotation angle at the time of rotating the to-be-illuminated surface 1050 around the normal line 1120. The direction φ is an invariable. The period of the periodic noise N (θ - φ) is determined by a shape and a depth of a grain in the to-be-illuminated surface 1050, for example. In Fig. 12, the periodic noise N (θ - φ) is ideally expressed by a cosine function. In a graph shown in Fig. 12, the period of the periodic noise N (θ - φ) is 180°. A fluctuation pattern of the periodic noise N (θ - φ) is a fluctuation pattern at a time when a wrinkle pattern or a grain in the to-be-illuminated surface 1050 has a two-fold rotational symmetry. When the direction φ of the to-be-illuminated surface 1050 is shifted by 60° from a base of 0°, the periodic noise N (θ - φ) is shifted in accordance with a phase difference of 60°.

The amount of reflection light at the time of locating the to-be-illuminated surface 1050 having the directional property at the angle of φ with regard to the illumination mechanism 1032 can be expressed by a cross correlation function of the periodic noise N (θ - φ) of the to-be-illuminated surface (the sample surface) and the periodic signal F (θ)

of the illumination light. Furthermore, when the periodic noise N (θ - $\phi$) can be ideally expressed by a cosine function of a period ("the noise period") v as the graph shown in Fig. 12, an obtained amount of reflection light Ev ($\phi$) is expressed by a formula (1).

[Formula 1]

$$Ev\left(\phi\right) = \int_{\theta=0}^{2\pi} Nv\left(\theta - \phi\right)F(\theta)d\theta \quad \cdot \cdot \cdot (1)$$

in which

$$0 \leq \phi \leq 2\pi$$

$$Nv(\theta) = \cos(2\pi\theta/v)$$

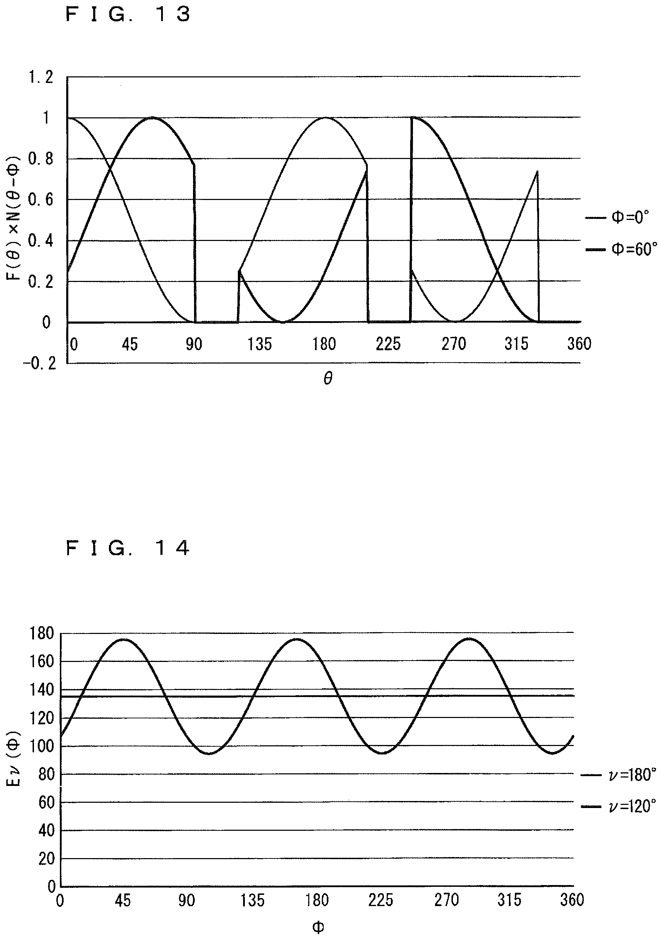

Fig. 13 is a view showing a fluctuation in a product of the periodic noise N (θ) of the to-be-illuminated surface in the formula (1) expressing the amount of reflection light Ev ($\phi$) and the periodic signal F (θ) of the illumination light with regard to the orientation θ in a graph form. The periodic signal F (θ) of Fig. 11 is adopted as the periodic signal F (Θ) of the illumination light. The periodic noise of Fig. 12 is adopted as the periodic noise N (θ) of the to-be-illuminated surface.

Fig. 14 is a view showing one example of a fluctuation in the amount of reflection light Ev ($\phi$) in the direction of light-receiving angle 0° with regard to the direction $\phi$ of the to-be-illuminated surface in a graph form. The signal shown in Fig. 11 is adopted as the periodic signal F (θ) of the illumination light. The signal ideally expressed by the cosine function is adopted as the periodic noise N (θ - $\phi$) of the to-be-illuminated surface, in a manner similar to the example of Fig. 12. 180° and 120° are adopted as the period v of the periodic noise.

The period of the periodic signal is 180°, so that when the period of the periodic noise is also 180°, the amount of the reflection light Ev ($\phi$) significantly fluctuates depending on the direction of the to-be-illuminated surface as shown in Fig. 14. In the meanwhile, when the period of the periodic noise is 120°, the amount of the reflection light is stable regardless of the direction $\phi$ of the to-be-illuminated surface.

The periodic noise N (θ - $\phi$) for the actual to-be-illuminated surface (the sample surface) often has a plurality of noise periods. The periodic noises in the above case can be expressed by adding the periodic noises of each period v.

In the meanwhile, it is confirmed in an experiment that the periodic noise of the to-be-illuminated surface which is actually measured includes much long-period components such as 180°, 120°, and 90°, or the like. In more detail, most common is the case where the period of the periodic noise is 180°. Even in case where the noise of the other period is included, the periodic noise of 180° is also included in many cases. On the contrary, there is hardly a case where the periods of 30° and 60° are included. It is also possible to obtain the configuration of the light radiation mechanism which can suppress the fluctuation in the amount of reflection light depending on the direction (the angle) $\phi$ of the to-be-illuminated surface 1050 by variously changing the configuration of the light radiation mechanism providing the periodic signal F (Θ) and obtaining the amount of reflection light calculated by the formula (1).

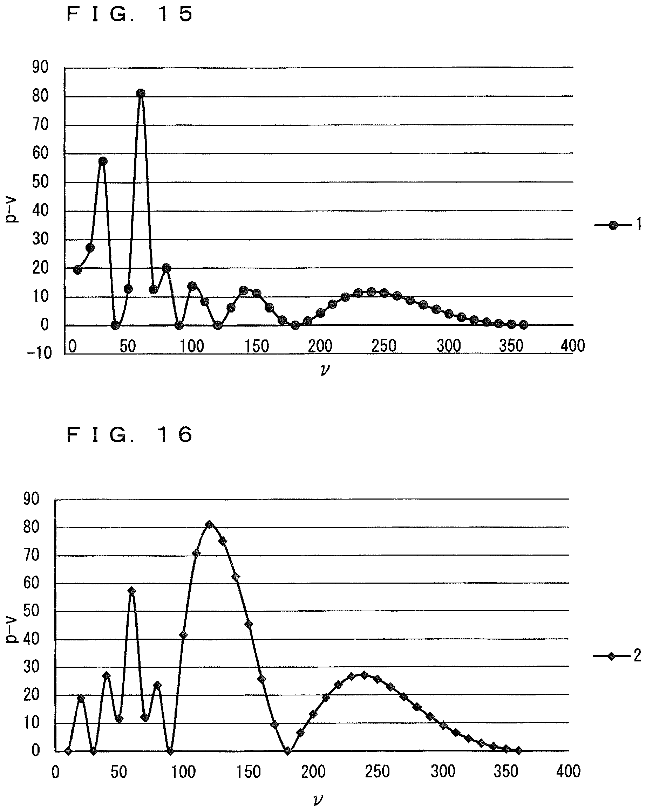

Fig. 15 to Fig. 18 are views each showing an example of fluctuation in an amplitude of the amount of reflection light in the direction of light-receiving angle 0° in a graph form. In Fig. 15 to Fig. 18, the fluctuation in the amplitude of the amount of reflection light is shown as graphs 1 to 4.

When an installation interval between the non-reflection regions or a width of the non-reflection region (the length of the non-reflection region along the virtual cylindrical surface K1 in the circumferential direction) in the reflection mechanism changes, the periodic signal of the illumination light also changes. In the graphs 1 to 4, each of the installation interval and the width described above is changed. In the graphs 1 to 4, the installation intervals of the non-reflection region are set to 60°, 120°, 180°, and 360° (there is only one non-reflection region 502), respectively. The widths of the non-reflection regions are set to 15°, 30°, 45°, 90°, respectively.

The amplitude of the amount of reflection light in the graph 1 takes a large peak value when the period of the periodic noise is 30° and 60°, however it takes a small value when the period of the periodic noise is longer than 60°. That is to say, when the period of the periodic noise is larger than 180°, the fluctuation in the amount of light reflected from the to-be-illuminated surface, which has the directional property in the reflectance characteristics, can be successfully suppressed. The period of the periodic noise of the actual to-be-illuminated surface is larger than 180° in many cases.

The amplitude of the amount of reflection light in the graph 2 takes a large peak value when the period of the periodic noise is 60° and 120°, however it takes a small value when the period of the periodic noise is 90° and 180°. Accordingly, the fluctuation in the amount of light reflected from many to-be-illuminated surfaces can be successfully suppressed.

The amplitude of the amount of reflection light in the graph 3 takes a large value when the period of the periodic noise is 90° and 180°. Accordingly, it is difficult to successfully suppress the fluctuation in the amount of light reflected from many to-be-illuminated surfaces.

Although the amplitude of the amount of reflection light in the graph 4 is 0 when the period of the periodic noise is 90°, the amplitude of the amount of reflection light increases as the period of the periodic noise gets longer. Accordingly, it is difficult to successfully suppress the fluctuation in the amount of light reflected from many to-be-illuminated surfaces.

According to the illumination mechanism of the present embodiment having the above configuration, the three or more non-reflection regions 502 are dispersedly disposed in the circumferential direction 1350 of the virtual cylindrical surface K1 surrounding the normal line 1120 of the to-be-illuminated surface 1050. Accordingly, the three or more reflection regions 500 are also dispersedly disposed in the circumferential direction 1350. In the meanwhile, the wrinkle pattern or the stripe pattern in the to-be-illuminated surface 1050 has a two-fold rotational symmetry in many cases. Therefore, suppressed is an occurrence of a case where the amount of reflection light extremely decreases by reason that, in the to-be-illuminated surface 1050, the illumination light 1042 is emitted from all the orientations in which the reflection ratio is low and the illumination light 1042 is not emitted from all the orientations in which the reflection ratio is high. Moreover, also suppressed is an occurrence of a case where the amount of reflection light extremely increases by reason that the illumination light 1042 is not emitted from all the orientations in which the reflection ratio is low and the illumination light 1042 is emitted from all the orientations in which the reflection ratio is high. Accordingly, the fluctuation in the amount of light of the reflection light 1043, which is emitted from the reflection mechanism 1191 to the to-be-illuminated surface 1050 having the directional property (also referred to as "the aeolotropy") in the reflectance characteristics and is then reflected from the to-be-illuminated surface 1050, can be suppressed. That is to say, when the plurality of reflection regions 500 do not have the same number-fold rotational symmetry as the wrinkle pattern in the to-be-illuminated surface 1050, for example, suppressed is a precise coincidence, in the to-be-illuminated surface 1050, of an orientation in which the reflection ratio is high and an orientation in which an amount of incident light in the illumination light 1042 is large and moreover, a precise coincidence of an orientation in which the reflection ratio is low and an orientation in which the amount of incident light is small is also suppressed. The fluctuation in the amount of light of the reflection light 1043 is thereby suppressed.

Since each of the three or more reflection regions 500 is the region having the partially-cylindrical shape to follow the virtual cylindrical surface K1, it can efficiently reflect the bundle of light beams, which is reflected from each reflection region 500 in the bundle of light beams emitted from the light radiation mechanism 1190, toward the to-be-illuminated surface 1050. Accordingly, the usage efficiency of the bundle of light beams can be improved.

According to the illumination mechanism of the present embodiment having the above configuration, since the three or more non-reflection regions 502 are disposed at regular intervals in the circumferential direction 1350 of the virtual cylindrical surface K1 surrounding the normal line 1120 of the to-be-illuminated surface 1050, the fluctuation in the amount of light reflected from the to-be-illuminated surface 1050 having the directional property in the reflectance characteristics can be further suppressed.

According to the illumination mechanism of the present embodiment having the above configuration, the plurality of reflection surfaces 1340 are provided in each of the three or more reflection region 500, and the plurality of reflection surfaces 1340 are arranged along the virtual cylindrical surface K1 in the circumferential direction 1350 of the virtual cylindrical surface K1. Accordingly, the usage efficiency of the bundle of light beams emitted from the light radiation mechanism 1190 can be further improved by adjusting each direction of the plurality of reflection surfaces 1340.

According to the illumination mechanism of the present embodiment having the above configuration, since each of the plurality of reflection surfaces 1340 is the planate reflection surface, each reflection surface can be easily manufactured, and the illumination device having little variation in performance can be easily manufactured.

According to the illumination mechanism of the present embodiment having the above configuration, each of the plurality of reflection surfaces 1340 is the curved reflection surface extending in the direction of the normal line, and the cross section perpendicular to the normal line forms the arc-like curved line convex toward the side of the normal line or the opposite side of the normal line, so that a region illuminated by the light reflected from each reflection surface 1340 can be widened and narrowed.

According to the illumination mechanism of the present embodiment having the above configuration, the reflection mechanism 1191 includes the plurality of members 340 arranged in the circumferential direction 1350 of the virtual cylindrical surface K1 for each of the plurality of reflection regions 500. The plurality of reflection surfaces 1340 are formed in the opposed surface in the at least one member 340 in the plurality of members 340. The members 340 adjacent to each other in the plurality of members 340 are coupled to each other so that each direction of the plurality of reflection surfaces 1340 is fixed to each other. Accordingly, a total number of components constituting the reflection mechanism 1191 can be reduced and a manufacturing cost of the illumination device can be thereby reduced.

According to the illumination mechanism of the present embodiment having the above configuration, the three or more non-reflection parts dispersedly disposed in each of the three or more reflection regions 500 are dispersedly disposed in the circumferential direction 1350 of the virtual cylindrical surface K1. Suppressed is the occurrence of the case where the amount of reflection light extremely decreases by reason that, in the to-be-illuminated surface 1050, the illumination light 1042 is emitted from all the orientations in which the reflection ratio is low and the illumination light 1042 is not emitted from all the orientations in which the reflection ratio is high. Moreover, also further suppressed is the occurrence of the case where the amount of reflection light extremely increases by reason that the illumination light 1042 is not emitted from all the orientations in which the reflection ratio is low and the illumination light 1042 is emitted from all the orientations in which the reflection ratio is high. Accordingly, the fluctuation in the amount of light reflected from the to-be-illuminated surface 1050, which has the directional property in the reflectance characteristics, can be further suppressed.

According to the illumination mechanism of the present embodiment having the above configuration, the three or more non-reflection parts are disposed at regular intervals in the circumferential direction 1350 of the virtual cylindrical surface K1. Accordingly, the fluctuation in the amount of light reflected from the to-be-illuminated surface 1050, which has the directional property in the reflectance characteristics, can be further suppressed.

According to the illumination mechanism of the present embodiment having the above configuration, the non-reflection part occupies the range, in the reflection region 500, larger than the range occupied by the one reflection surface 1340, in the reflection region 500, in the plurality of reflection surfaces 1340. Accordingly, since the extreme reduction in the size of the non-reflection region 502 can be suppressed, the fluctuation in the amount of light reflected from the to-be-illuminated surface 1050, which has the directional property in the reflectance characteristics, can be further suppressed.

According to the illumination mechanism of the present embodiment having the above configuration, since the part of the reflection region 500 excluding the non-reflection part is larger than the non-reflection part, the reduction in the amount of light reflected from the reflection region 500 toward the to-be-illuminated surface 1050 can be suppressed.

According to the illumination mechanism of the present embodiment having the above configuration, the light emitted from the xenon lamp 1200 is diffused and reflected by the diffusion reflection surface 1245 and then emitted from the round emission port, the light emitted from the light radiation mechanism 1190 is uniformized, and the light radiation mechanism 1190 substantially has vertical light distribution characteristics conforming to Lambert's cosine law. Accordingly, even when the to-be-illuminated surface 1050 moves in the direction of its normal line, the fluctuation in the illumination intensity can be suppressed.

According to the illumination mechanism 1032 of the present embodiment having the above configuration, since the surface light source is the LED light source, the surface light source can be reduced in size, and the size of the whole illumination device can be thereby reduced.

According to the measurement mechanism of the present embodiment having the above configuration, the fluctuation in the amount of light of the reflection light 1043 reflected from the to-be-illuminated surface 1050 can be suppressed even when the measurement is performed on the to-be-illuminated surface 1050 having the directional property in the reflectance characteristics, so that the stable measurement value can be obtained.

According to the illumination mechanism of the present embodiment having the above configuration, the three or more non-reflection regions are dispersedly disposed in the circumferential direction 1350 of the virtual cylindrical surface K1 surrounding the normal line of the to-be-illuminated surface 1050. Accordingly, the three or more non-reflection regions are also dispersedly disposed in the circumferential direction 1350. The fluctuation in the amount of light, which is emitted to the to-be-illuminated surface 1050 having the directional property in the reflectance characteristics and is then reflected from the to-be-illuminated surface 1050, can be suppressed. Since each of the three or more reflection regions is the region having the partially-cylindrical shape to follow the virtual cylindrical surface K1, it can efficiently reflect the bundle of light beams, which is reflected from each reflection region in the bundle of light beams emitted from the light radiation mechanism 1190, toward the to-be-illuminated surface 1050, and the usage efficiency of the bundle of light beams can be thereby improved.

The present invention has been shown and described in detail, the foregoing description is in all aspects illustrative and not restrictive. According to the present invention, the embodiments can be appropriately varied or omitted within the scope of the invention.

Explanation of Reference Signs

1000    Colorimeter
1010    Measurement mechanism (reflectance characteristic measuring device)
1011    Controller
1032    Illumination mechanism for color measurement (illumination device)
1033    Light-receiving mechanism for color measurement (light-receiving mechanism)

| 1034 | Light-receiving mechanism for correction |
| 1340 | Reflection surface |
| 1342 | Non-reflection surface |
| 1050 | To-be-illuminated surface |
| 1120 | Normal line |
| 1190 | Light radiation mechanism (surface light source) |
| 1191 | Reflection mechanism |
| 1200 | Straight-tube type xenon lamp |
| 1201 | Integrating sphere |
| 1202 | Baffle |
| 500 | Reflection region |
| 502 | Non-reflection region |
| 600 | Mirror block |
| K1 | Virtual cylindrical surface |

**Claims**

1. A reflection characteristics measurement device (1010), comprising an illumination device (1032) that illuminates a to-be-illuminated surface (1050), and a light-receiving mechanism (1033) including a mirror (1360) or a prism,

   said illumination device (1032) comprising:

   a surface light source (1190) being disposed on a normal line (1120) of said to-be-illuminated surface; and
   a reflection mechanism (1191) being provided between said surface light source and said to-be-illuminated surface so as to surround said normal line for reflecting a light emitted from said surface light source toward said to-be-illuminated surface, wherein
   in said reflection mechanism,
   a reflection region (500) that reflects said light toward said to-be-illuminated surface and a low-reflection region having a reflection ratio at a time of reflecting said light toward said to-be-illuminated surface lower than said reflection region are alternately disposed along a virtual cylindrical surface (K1) surrounding said normal line in a circumferential direction of said virtual cylindrical surface, and three or more reflection regions and three or more low-reflection regions are thereby disposed, with one of said low-reflection regions receiving said light-receiving mechanism (1033), with said mirror or said prism of the light-receiving mechanism located on said normal line (1120);
   each of said three or more reflection regions is a region having a partially-cylindrical shape to follow said virtual cylindrical surface, and
   said three or more low-reflection regions are dispersedly disposed to surround said normal line in said circumferential direction,

   wherein,
   a plurality of reflection surfaces (1340) reflecting said light toward said to-be-illuminated surface (1050) are provided in each of said three or more reflection regions,
   said plurality of reflection surfaces are arranged along said virtual cylindrical surface (K1) in said circumferential direction, and
   said light-receiving mechanism (1033) is configured to receive a reflection light generated at a time when said to-be-illuminated surface reflects said light reflected by said reflection mechanism, and to then output a measurement result of said reflection light.

2. The reflection characteristics measurement device (1010) according to claim 1, wherein
   said three or more low-reflection regions are disposed at regular intervals in said circumferential direction.

3. The reflection characteristics measurement device (1010) according to claim 1 or 2, wherein
   each of said plurality of reflection surfaces (1340) is a planate reflection surface.

4. The reflection characteristics measurement device (1010) according to claim 1 or 2, wherein
   each of said plurality of reflection surfaces (1340) is a curved reflection surface extending in a direction of said normal line (1120), and a cross section perpendicular to said normal line forms an arc-like curved line convex toward a side of said normal line or an opposite side of said normal line.

5. The reflection characteristics measurement device (1010) according to any one of claims 1 to 4, wherein

said reflection mechanism (1191) includes a plurality of members (340) arranged in said circumferential direction of said virtual cylindrical surface (K1) for each of said plurality of reflection regions (500),
each of said plurality of members includes an opposed surface facing said normal line (1120),
said plurality of reflection surfaces (1340) are formed in said opposed surface in at least two members in said plurality of members, and
said members adjacent to each other in said plurality of members are coupled to each other so that each direction of said plurality of reflection surfaces is fixed to each other.

6. The reflection characteristics measurement device (1010) according to any one of claims 1 to 5, wherein

a non-reflection part (1342) which does not reflect said light toward said to-be-illuminated surface is disposed in a part of each of said three or more reflection regions (500), and
three or more non-reflection parts being disposed in each of said three or more reflection regions are dispersedly disposed in said circumferential direction of said virtual cylindrical surface (K1) so as to surround said normal line (1120).

7. The reflection characteristics measurement device (1010) according to claim 6, wherein
said three or more non-reflection parts (1342) are disposed at regular intervals in said circumferential direction.

8. The reflection characteristics measurement device (1010) according to claim 6 or 7, wherein
said non-reflection part (1342) occupies a range, in said reflection region (500), larger than a range occupied by one reflection surface (1340), in said reflection region, in said plurality of reflection surfaces.

9. The reflection characteristics measurement device (1010) according to any one of claims 6 to 8, wherein
a part of said reflection region (500) excluding said non-reflection part (1342) is larger than said non-reflection part.

10. The reflection characteristics measurement device (1010) according to any one of claims 1 to 9, wherein
said surface light source (1190) is a light radiation mechanism that includes:

an integrating sphere (1201) in which a spherical space (1210) and a round emission port (1211) are formed, said integrating sphere includes an inner surface (1220) specifying said space, said inner surface including a diffusion reflection surface (1245), said emission port connecting said space and outside, and said space and said emission port having said normal line as a common central axis; and
a straight-tube type light source (1200) which passes across said space to extend in a tube axis direction (1310) and includes a discharge section.

11. The reflection characteristics measurement device (1010) according to claim 10, wherein

said integrating sphere (1201) is formed by integrating hemispheres (1205, 1206) coupled to each other, said integrating hemispheres forming hemispherical spaces (1207, 1208) specified by hemispherical inner surfaces (1217, 1218),
said round emission port (1211) is specified by the hemispherical inner surface of one of the integrating hemispheres, and
a diameter of said hemispherical space formed by said one of the integrating hemisphere is smaller than a diameter of the other hemispherical space.

12. The reflection characteristics measurement device (1010) according to any one of claims 1 to 10, wherein
said surface light source (1190) is an LED light source.

13. The reflection characteristics measurement device (1010) according to any one of claims 1 to 12, wherein each of said low-reflection regions is a non-reflection region (502) having a reflection ratio of 10% or less, and preferably 5% or less.

14. The reflection characteristics measurement device (1010) according to any one of claims 1 to 13, wherein an interval between said low-reflection regions is 60° or 120°.

**Patentansprüche**

1. Reflexionseigenschaften-Messvorrichtung (1010), umfassend eine Beleuchtungsvorrichtung (1032), die eine zu beleuchtende Oberfläche (1050) beleuchtet, und einen Lichtempfangsmechanismus (1033) einschließlich eines Spiegels (1360) oder eines Prismas,

   wobei die Beleuchtungsvorrichtung (1032) umfasst:

   eine Oberflächenlichtquelle (1190), die auf einer Normalenlinie (1120) der zu beleuchtenden Oberfläche angeordnet ist; und
   einen Reflexionsmechanismus (1191), der zwischen der Oberflächenlichtquelle und der zu beleuchtenden Oberfläche bereitgestellt ist, damit er die Normalenlinie umgibt, um ein von der Oberflächenlichtquelle emittiertes Licht in Richtung der zu beleuchtenden Oberfläche zu reflektieren, wobei
   in dem Reflexionsmechanismus,
   ein Reflexionsbereich (500), der das Licht in Richtung der zu beleuchtenden Oberfläche reflektiert, und ein reflexionsarmer Bereich, der zum Zeitpunkt der Reflexion des Lichts in Richtung der zu beleuchtenden Oberfläche ein geringeres Reflexionsverhältnis als der Reflexionsbereich aufweist, abwechselnd entlang einer virtuellen zylindrischen Oberfläche (K1) angeordnet sind, die die Normalenlinie in einer Umfangsrichtung der virtuellen zylindrischen Oberfläche umgibt,

   und dadurch drei oder mehr Reflexionsbereiche und drei oder mehr reflexionsarme Bereiche angeordnet sind, wobei einer der reflexionsarmen Bereiche den Lichtempfangsmechanismus (1033) empfängt, wobei sich der Spiegel oder das Prisma des Lichtempfangsmechanismus auf der Normalenlinie (1120) befindet;

   jeder der drei oder mehr Reflexionsbereiche ein Bereich ist, der eine teilweise zylindrische Form aufweist, um der virtuellen zylindrischen Oberfläche zu folgen, und
   die drei oder mehr reflexionsarmen Bereiche verstreut angeordnet sind, um die Normalenlinie in der Umfangsrichtung zu umgeben, wobei

   eine Vielzahl von Reflexionsflächen (1340), die das Licht in Richtung der zu beleuchtenden Oberfläche (1050) reflektieren, in jedem der drei oder mehr Reflexionsbereiche bereitgestellt sind, wobei die Vielzahl von Reflexionsflächen entlang der virtuellen zylindrischen Oberfläche (K1) in der Umfangsrichtung angeordnet sind, und der Lichtempfangsmechanismus (1033) so konfiguriert ist, dass er ein Reflexionslicht empfängt, das zu einem Zeitpunkt erzeugt wird, zu dem die zu beleuchtende Oberfläche das von dem Reflexionsmechanismus reflektierte Licht reflektiert, und dass er dann ein Messergebnis des Reflexionslichts ausgibt.

2. Reflexionseigenschaften-Messvorrichtung (1010) nach Anspruch 1, wobei die drei oder mehr reflexionsarmen Bereiche in regelmäßigen Abständen in der Umfangsrichtung angeordnet sind.

3. Reflexionseigenschaften-Messvorrichtung (1010) nach Anspruch 1 oder 2, wobei jede der Vielzahl von Reflexionsflächen (1340) eine ebene Reflexionsfläche ist.

4. Reflexionseigenschaften-Messvorrichtung (1010) nach Anspruch 1 oder 2, wobei jede der Vielzahl von Reflexionsflächen (1340) eine gekrümmte Reflexionsfläche ist, die sich in einer Richtung der Normalenlinie (1120) erstreckt, und ein Querschnitt senkrecht zu der Normalenlinie eine bogenförmige gekrümmte Linie bildet, die zu einer Seite der Normalenlinie oder einer gegenüberliegenden Seite der Normalenlinie konvex ist.

5. Reflexionseigenschaften-Messvorrichtung (1010) nach einem der Ansprüche 1 bis 4, wobei

   der Reflexionsmechanismus (1191) eine Vielzahl von Elementen (340) einschließt, die in der Umfangsrichtung der virtuellen zylindrischen Oberfläche (K1) für jeden der Vielzahl von Reflexionsbereichen (500) angeordnet sind,
   jedes der Vielzahl von Elementen eine gegenüberliegende Oberfläche einschließt, die der Normalenlinie (1120) zugewandt ist,
   die Vielzahl von Reflexionsflächen (1340) in der gegenüberliegenden Oberfläche in mindestens zwei Elementen in der Vielzahl von Elementen ausgebildet sind, und
die einander benachbarten Elemente in der Vielzahl von Elementen miteinander gekoppelt sind, so dass jede Richtung der Vielzahl von Reflexionsflächen aneinander befestigt ist.

6. Reflexionseigenschaften-Messvorrichtung (1010) nach einem der Ansprüche 1 bis 5, wobei

    ein Nicht-Reflexionsteil (1342), der das Licht nicht in Richtung der zu beleuchtenden Oberfläche reflektiert, in einem Teil jedes der drei oder mehr Reflexionsbereiche (500) angeordnet ist, und
    drei oder mehr Nicht-Reflexionsteile, die in jedem der drei oder mehr Reflexionsbereiche angeordnet sind, in der Umfangsrichtung der virtuellen zylindrischen Oberfläche (K1) verstreut angeordnet sind, damit sie die Normalenlinie (1120) umgeben.

7. Reflexionseigenschaften-Messvorrichtung (1010) nach Anspruch 6, wobei
die drei oder mehr Nicht-Reflexionsteile (1342) in regelmäßigen Abständen in der Umfangsrichtung angeordnet sind.

8. Reflexionseigenschaften-Messvorrichtung (1010) nach Anspruch 6 oder 7, wobei
der Nicht-Reflexionsteil (1342) einen Bereich in dem Reflexionsbereich (500) einnimmt, der größer ist als ein Bereich, der von einer Reflexionsfläche (1340) in dem Reflexionsbereich in der Vielzahl von Reflexionsflächen eingenommen wird.

9. Reflexionseigenschaften-Messvorrichtung (1010) nach einem der Ansprüche 6 bis 8, wobei
ein Teil des Reflexionsbereichs (500) mit Ausnahme des Nicht-Reflexionsteils (1342) größer ist als der Nicht-Reflexionsteil.

10. Reflexionseigenschaften-Messvorrichtung (1010) nach einem der Ansprüche 1 bis 9, wobei
die Oberflächenlichtquelle (1190) ein Lichtstrahlungsmechanismus ist, der einschließt:

    eine Ulbricht-Kugel (1201), in der ein kugelförmiger Raum (1210) und eine runde Emissionsöffnung (1211) ausgebildet sind, wobei die Ulbricht-Kugel eine Innenfläche (1220) einschließt, die den Raum beschreibt, wobei die Innenfläche eine Diffusionsreflexionsfläche (1245) einschließt, wobei die Emissionsöffnung den Raum und die Außenseite verbindet, und wobei der Raum und die Emissionsöffnung die Normalenlinie als eine gemeinsame Mittelachse aufweisen; und
    eine Lichtquelle (1200) vom Typ einer geraden Röhre, die durch den Raum verläuft, um sich in einer Röhrenachsenrichtung (1310) zu erstrecken, und die einen Entladungsabschnitt einschließt.

11. Reflexionseigenschaften-Messvorrichtung (1010) nach Anspruch 10, wobei

    die Ulbricht-Kugel (1201) durch miteinander gekoppelte Ulbricht-Halbkugeln (1205, 1206) gebildet wird, wobei die Ulbricht-Halbkugeln halbkugelförmige Räume (1207, 1208) bilden, die durch halbkugelförmige Innenflächen (1217, 1218) beschrieben sind,
    die runde Emissionsöffnung (1211) durch die halbkugelförmige Innenfläche einer der Ulbricht-Halbkugeln beschrieben ist, und
    ein Durchmesser des halbkugelförmigen Raums, der durch die eine der Ulbricht-Halbkugeln gebildet wird, kleiner ist als ein Durchmesser des anderen halbkugelförmigen Raums.

12. Reflexionseigenschaften-Messvorrichtung (1010) nach einem der Ansprüche 1 bis 10, wobei
die Oberflächenlichtquelle (1190) eine LED-Lichtquelle ist.

13. Reflexionseigenschaften-Messvorrichtung (1010) nach einem der Ansprüche 1 bis 12, wobei jeder der reflexionsarmen Bereiche ein Nicht-Reflexionsbereich (502) ist, der ein Reflexionsverhältnis von 10 % oder weniger, vorzugsweise 5 % oder weniger, aufweist.

14. Reflexionseigenschaften-Messvorrichtung (1010) nach einem der Ansprüche 1 bis 13, wobei ein Abstand zwischen den reflexionsarmen Bereichen 60° oder 120° beträgt.

**Revendications**

1. Dispositif (1010) de mesure de caractéristiques de réflexion, comprenant un dispositif (1032) d'éclairage qui éclaire une surface (1050) à éclairer, et un mécanisme (1033) de réception de lumière incluant un miroir (1360) ou un prisme,

   ledit dispositif (1032) d'éclairage comprenant :

   une source de lumière (1190) de surface étant disposée sur une ligne normale (1120) de ladite surface à éclairer ; et
   un mécanisme de réflexion (1191) qui est prévu entre ladite source de lumière de surface et ladite surface à éclairer de façon à entourer ladite ligne normale pour réfléchir une lumière émise depuis ladite source de lumière de surface vers ladite surface à éclairer, dans lequel
   dans ledit mécanisme de réflexion,
   une région de réflexion (500) qui réfléchit ladite lumière vers ladite surface à éclairer et une région de faible réflexion présentant un rapport de réflexion à un moment de réflexion de ladite lumière vers ladite surface à éclairer inférieur à ladite région de réflexion sont disposées de manière alternée le long d'une surface cylindrique virtuelle (K1) entourant ladite ligne normale dans une direction circonférentielle de ladite surface cylindrique virtuelle, et trois régions de réflexion ou plus et trois régions de faible réflexion ou plus sont ainsi disposées, avec l'une desdites régions de faible réflexion recevant ledit mécanisme (1033) de réception de lumière, avec ledit miroir ou ledit prisme du mécanisme de réception de lumière situé sur ladite ligne normale (1120) ;
   chacune desdites trois régions de réflexion ou plus est une région présentant une forme partiellement cylindrique pour suivre ladite surface cylindrique virtuelle, et
   lesdites trois régions de faible réflexion ou plus sont disposées de manière dispersée pour entourer ladite ligne normale dans ladite direction circonférentielle, dans lequel,

   une pluralité de surfaces de réflexion (1340) réfléchissant ladite lumière vers ladite surface (1050) à éclairer sont prévues dans chacune desdites trois régions de réflexion ou plus, ladite pluralité de surfaces de réflexion sont agencées le long de ladite surface cylindrique virtuelle (K1) dans ladite direction circonférentielle, et
   ledit mécanisme (1033) de réception de lumière est configuré pour recevoir une lumière de réflexion générée à un moment où ladite surface à éclairer réfléchit ladite lumière réfléchie par ledit mécanisme de réflexion, et pour ensuite délivrer en sortie un résultat de mesure de ladite lumière de réflexion.

2. Dispositif (1010) de mesure de caractéristiques de réflexion selon la revendication 1, dans lequel
   lesdites trois régions de faible réflexion ou plus sont disposées à intervalles réguliers dans ladite direction circonférentielle.

3. Dispositif (1010) de mesure de caractéristiques de réflexion selon la revendication 1 ou la revendication 2, dans lequel chacune de ladite pluralité de surfaces de réflexion (1340) est une surface de réflexion plane.

4. Dispositif (1010) de mesure de caractéristiques de réflexion selon la revendication 1 ou la revendication 2, dans lequel chacune de ladite pluralité de surfaces de réflexion (1340) est une surface de réflexion incurvée s'étendant dans une direction de ladite ligne normale (1120), et une section transversale perpendiculaire à ladite ligne normale forme une ligne incurvée de type arc convexe vers un côté de ladite ligne normale ou un côté opposé de ladite ligne normale.

5. Dispositif (1010) de mesure de caractéristiques de réflexion selon l'une quelconque des revendications 1 à 4, dans lequel

   ledit mécanisme de réflexion (1191) inclut une pluralité d'éléments (340) agencés dans ladite direction circonférentielle de ladite surface cylindrique virtuelle (K1) pour chacune de ladite pluralité de régions de réflexion (500),
   chacune de ladite pluralité d'éléments inclut une surface opposée faisant face à ladite ligne normale (1120),
   ladite pluralité de surfaces de réflexion (1340) sont formées dans ladite surface opposée dans au moins deux éléments dans ladite pluralité d'éléments, et
   lesdits éléments adjacents les uns aux autres dans ladite pluralité d'éléments sont couplés les uns aux autres de sorte que chaque direction de ladite pluralité de surfaces de réflexion est fixée l'une à l'autre.

6. Dispositif (1010) de mesure de caractéristiques de réflexion selon l'une quelconque des revendications 1 à 5, dans lequel

une partie de non-réflexion (1342) qui ne réfléchit pas ladite lumière vers ladite surface à éclairer est disposée dans une partie de chacune desdites trois régions de réflexion (500) ou plus, et

trois parties de non-réflexion ou plus étant disposées dans chacune desdites trois régions de réflexion ou plus sont disposées de manière dispersée dans ladite direction circonférentielle de ladite surface cylindrique virtuelle (K1) de façon à entourer ladite ligne normale (1120).

7.  Dispositif (1010) de mesure de caractéristiques de réflexion selon la revendication 6, dans lequel
    lesdites trois parties de non-réflexion (1342) ou plus sont disposées à intervalles réguliers dans ladite direction circonférentielle.

8.  Dispositif (1010) de mesure de caractéristiques de réflexion selon la revendication 6 ou la revendication 7, dans lequel
    ladite partie de non-réflexion (1342) occupe une plage, dans ladite région de réflexion (500), plus grande qu'une plage occupée par une surface de réflexion (1340), dans ladite région de réflexion, dans ladite pluralité de surfaces de réflexion.

9.  Dispositif (1010) de mesure de caractéristiques de réflexion selon l'une quelconque des revendications 6 à 8, dans lequel
    une partie de ladite région de réflexion (500) excluant ladite partie de non-réflexion (1342) est plus grande que ladite partie de non-réflexion.

10. Dispositif (1010) de mesure de caractéristiques de réflexion selon l'une quelconque des revendications 1 à 9, dans lequel
    ladite source de lumière (1190) de surface est un mécanisme de rayonnement lumineux qui inclut :

    une sphère d'intégration (1201) dans laquelle un espace sphérique (1210) et un orifice d'émission (1211) rond sont formés, ladite sphère d'intégration inclut une surface interne (1220) spécifiant ledit espace, ladite surface interne incluant une surface de réflexion de diffusion (1245), ledit orifice d'émission reliant ledit espace et l'extérieur, et ledit espace et ledit orifice d'émission présentant ladite ligne normale en tant qu'axe central commun ; et
    une source de lumière (1200) de type tube droit qui passe à travers ledit espace pour s'étendre dans une direction (1310) d'axe de tube et inclut une section d'évacuation.

11. Dispositif (1010) de mesure de caractéristiques de réflexion selon la revendication 10, dans lequel

    ladite sphère d'intégration (1201) est formée en intégrant des hémisphères (1205, 1206) couplés les uns aux autres, lesdits hémisphères d'intégration formant des espaces hémisphériques (1207, 1208) spécifiés par des surfaces internes (1217, 1218) hémisphériques,
    ledit orifice d'émission (1211) rond est spécifié par la surface interne hémisphérique de l'un des hémisphères d'intégration, et
    un diamètre dudit espace hémisphérique formé par ledit un des hémisphères d'intégration est plus petit qu'un diamètre de l'autre espace hémisphérique.

12. Dispositif (1010) de mesure de caractéristiques de réflexion selon l'une quelconque des revendications 1 à 10, dans lequel
    ladite source de lumière (1190) de surface est une source de lumière LED.

13. Dispositif (1010) de mesure de caractéristiques de réflexion selon l'une quelconque des revendications 1 à 12, dans lequel chacune desdites régions de faible réflexion est une région de non-réflexion (502) présentant un rapport de réflexion de 10 % ou moins, et de préférence de 5 % ou moins.

14. Dispositif (1010) de mesure de caractéristiques de réflexion selon l'une quelconque des revendications 1 à 13, dans lequel un intervalle entre lesdites régions de faible réflexion est de 60° ou 120°.

FIG. 1

F I G. 2

F I G. 3

EP 3 232 171 B1

FIG. 4

EP 3 232 171 B1

F I G. 5

FIG. 6

F I G. 7

FIG. 8

EP 3 232 171 B1

F I G.  9

F I G. 1 0

F I G. 1 1

F I G. 1 2

FIG. 13

FIG. 14

F I G. 1 5

F I G. 1 6

F I G. 1 7

F I G. 1 8

**EP 3 232 171 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8130377 B
- JP 2010281808 A

- WO 2014192554 A1